# EUROPEAN PATENT SPECIFICATION

(11) **EP 2 521 309 B1**
(45) Date of publication and mention of the grant of the patent: **31.08.2016**
(21) Application number: 10840731.3
(22) Date of filing: 25.11.2010
(51) Int. Cl.: H04L 12/24, H04L 12/70, H04L 12/931, H04L 12/937, H04L 12/725, H04L 12/751, H04L 12/717

(54) **COMMUNICATIONS SYSTEM AND TOPOLOGY INFORMATION GENERATION METHOD**
KOMMUNIKATIONSSYSTEM UND VERFAHREN ZUR ERZEUGUNG VON TOPOLOGIE-INFORMATIONEN
SYSTÈME DE COMMUNICATIONS ET PROCÉDÉ DE GÉNÉRATION D'INFORMATIONS TOPOLOGIQUES

(30) Priority: 28.12.2009 JP 2009298853
(43) Date of publication of application: 07.11.2012
(73) Proprietor: NEC Corporation, Tokyo 108-8001 (JP)
(72) Inventor: KOIDE, Toshio, Tokyo 108-8001 (JP)
(74) Representative: Robson, Aidan John
(86) International application number: PCT/JP2010/006878
(87) International publication number: WO 2011/080871

(56) References cited:
- EP-A1- 0 588 744
- WO-A2-2009/042919
- JP-A- 2002 223 235
- JP-A- 2004 129 054
- JP-A- 2007 104 350
- US-A1- 2005 220 100
- US-A1- 2007 076 634
- Nick McKeown ET AL: "OpenFlow: Enabling Innovation in Campus Networks", , 14 March 2008 (2008-03-14), pages 1-6, XP055002028, Retrieved from the Internet: URL:http://www.openflow.org/documents/open flow-wp-latest.pdf [retrieved on 2011-07-05]

## Description

### Technical Field

The present invention relates to a communication system including a plurality of packet transfer units and a control unit for controlling the packet transfer units. The invention also relates to a packet transfer unit, control unit, topology information creating method, and control unit-use program applied to the communication system.

### Background Art

There is a communication system including a plurality of switches that each transfer a packet, and a control unit that controls each switch, in the communication system of which, the control unit sets flow entry information in each switch and the switch transfers a received packet in accordance with the flow entry information. The flow entry information provides for the type of processing (e.g., transferring, discarding, updating, or others) that the received packet is to undergo, depending on a header of the packet. Such a communication system requires a control channel used for the control unit to control the switch. For example, if the switch receives a packet not defined in the flow entry information, the switch notifies this to the control unit and then the control unit transmits appropriate flow entry information to the switch according to the particular packet. The control channel is used for purposes such as the notification from the switch to the control unit and the transmission of flow entry information from the control unit to the switch. The protocol used for the control unit to control the switch is called OpenFlow. The switch can be considered as a packet transfer unit that transfers the packet. The control channel is equivalent to a "secure channel" in the OpenFlow protocol. Also, the control unit is called the controller in OpenFlow.

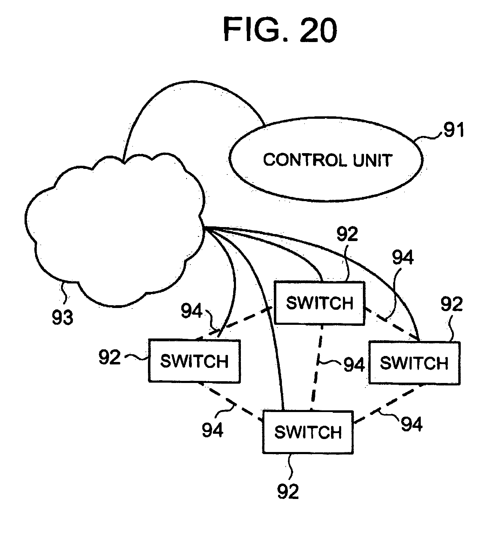

Specifications of OpenFlow are described in Non-Patent Document 1. It is provided for in the specifications of OpenFlow that the control unit and the switch should use SSL (Secure Socket Layer) to communicate in TCP (Transmission Control Protocol) of port number 6633. Accordingly, the communication systems to which the OpenFlow protocol is applied commonly include two independent communications networks. One is a communications network with a plurality of switches for transferring packets in order, and the other is a communications network that operates as the control channel between the control unit and each switch. FIG. 20 is an explanatory diagram that shows an example of a general communication system to which the OpenFlow protocol is applied. Each of the switches 92 shown in FIG. 20 uses a packet transfer communications network 94 to transfer the received packet to other switches in accordance with flow entry information. In addition, a control communications network 93 to serve as the control channel is provided independently of the packet transfer communications network 94, and a control unit 91 controls each switch 92 via the control communications network 93. The control communications network 93 uses a routing protocol such as STP (Spanning Tree Protocol), TCP/IP (Transmission Control Protocol/Internet Protocol), RIP (Routing Information Protocol), or OSPF (Open Shortest Path First).

Furthermore, in the communication system shown by way of example in FIG. 20, when a topology of the switches is changed, each switch exchanges control frames in the communication system and recognizes a new topology. Examples of a control frame for recognizing the topology include, for example, BPDU (Bridge Protocol Data Unit) in STP, and others.

Patent Document 1 discloses a system including management apparatus and packet communication apparatuses. The management apparatus transmits topology information request message. The destination address of the topology information request message is a broadcast address. The management apparatus receives topology information notification message.

Patent Document 2 discloses a network operating method for managing networks. In the method, Events are announced that correspond to changes in the state of the network and one or more network elements can be configured accordingly.

Patent Document 3 discloses a device for interconnecting network devices. The device has a plurality of address tables corresponding to respective ones of a plurality of ports. When a network device is newly connected to a port, address information of the network device is set in a corresponding address table.

Patent Document 4 discloses a network topology generator which identifies addresses and locations of multiple stations connected to a single access port of a communications network.

Non-patent Document 2 describes OpenFlow.

### Citation List

Patent Literature
- Patent Document 1:: US 2007/0076634 A1
- Patent Document 2:: WO 2009/042919 A2
- Patent Document 3:: US 2005/220100 A1
- Patent Document 4:: EP 2 521 308 A1

### Non-patent Literature

Non-Patent Document 1 "OpenFlow Switch Specification Version 0.9.0", "4.4 Encryption", July 20, 2009 (Searched on Oct. 6, 2011), Internet <http://www.openflowswitch.org/documents/openflow-spec-v0.9.0.pdf>
Non-Patent Document 2 "OpenFlow: Enabling Innovation in Campus Networks"

### Summary of Invention

### Technical Problem

The OpenFlow-based general communication system in FIG. 20 uses the control communications network 93 and the packet transfer communications network 94. However, in a communication system including a plurality of packet transfer units and a control unit that controls each packet transfer unit, it is preferable that the communications network used for each packet transfer unit to transfer packets, and the communications network used for the control unit to control each packet transfer unit should be integrated into one kind.

Accordingly, the present invention is intended to provide: a communication system including a plurality of packet transfer units and a control unit that controls each packet transfer unit, the communication system being configured so that a communications network used for each packet transfer unit to transfer packets, and a communications network used for the control unit to control each packet transfer unit can be integrated into one kind; and a packet transfer unit, control unit, method of creating topology information, and control unit-use program applied to the communication system.

### Solution to Problem

A communication system according to the present invention a communication system comprising a plurality of switches (20a, 20b, 20c, 20d) and a control unit (10) that controls each of the switches, characterized in that the control unit includes a reply request transmitting means (11) that transmits a reply request to the switch, a reply receiving means (11) that receives a reply including information on ports provided at the switch, from the switch, a topology information creating means (12) that creates topology information, based on the reply transmitted from each switch, the topology information including port interconnection information relative to ports provided at the control unit and each port of the switches, and a control channel determining means (14) that determines a control channel for control messages, using a communication network that the switches use to transfer packets, based on the topology information and the switch includes a transfer means (21) that transfers the reply request from a port other than that through which the reply request has been received, when the reply request is received, and a reply transmitting means (21) that returns the reply including information on the ports of the switch, the reply being transmitted through a path for the control unit, when the reply request is received and the control unit transmits control messages to each switch and receives control messages from each switch, via the control channel that is determined using the communication network.

A control unit according to the present invention controls a control unit that controls a plurality of switches, characterized in that the control unit comprising a reply request transmitting means (11) that transmits a reply request to the switch, a reply receiving means (11) that receives a reply including information on ports provided at the switch, from the switch, a topology information creating means (12) that creates topology information, based on the reply transmitted from each switch, the topology information including port interconnection information relative to ports provided at the control unit and each port of the switches, a control channel determining means (14) that determines a control channel for control messages, using a communication network that the switches use to transfer packets, based on the topology information, and a means (15) that transmits control messages to each switch and receives control messages from each switch, via the control channel that is determined using the communication network.

A switch according to yet another aspect of the present invention a switch controlled by a control unit in OpenFlow, characterized in that the switch comprising a transfer means (21) that transfers the reply request from a port other than that through which the reply request has been received, when the reply request from the control unit is received, a reply transmitting means (21) that returns the reply including information on the ports of the switch, the reply being transmitted through a path for the control unit, when the reply request from the control unit is received, and a means (25) that transmits and receives control messages via a control channel that is determined by the control unit using a communication network that the switch uses to transfer packets, based on topology information.

A control method implemented by a control unit (10) that controls a plurality of switches (20a, 20b, 20c, 20d), characterized in that the control unit executes transmitting a reply request to each switch receiving, from the switch, a reply that includes information on ports provided at the switch creating topology information, based on the reply transmitted from each switch, the topology information including port interconnection information relative to ports provided at the control unit and each port of the switches and determining a control channel for control messages, using a communication network that the switches use to transfer packets, based on the topology information.

A control unit-use program according to the present invention is intended to be installed on a computer a control unit-use program installed on a computer which is a control unit (10) that controls a plurality of switches (20a, 20b, 20c, 20d), characterized in that the program causing the computer to execute transmitting a reply request to each switch receiving, from the switch, a reply that includes information on ports provided at the switch creating topology information, based on the reply transmitted from each switch, the topology information including port interconnection information relative to ports provided at the control unit and each port of the switches determining a control channel for control messages, using a communication network that the switches use to transfer packets, based on the topology information and transmitting control messages to each switch and receiving control messages from each switch, via the control channel that is determined using the communication network.

### Advantageous Effects of the Invention

According to the present invention, in a communication system including a plurality of packet transfer units and a control unit that controls each packet transfer unit, a communications network used for each packet transfer unit to transfer packets, and a communications network used for the control unit to control each packet transfer unit can be integrated into one kind.

### Brief Description of Drawings

[FIG. 1] It depicts an explanatory diagram that schematically shows process steps from a state under which a control unit stores no topology information, until the control unit starts tunneling-based communication.
[FIG. 2] It depicts a block diagram showing an example of a configuration of the control unit and switches equipped in the communication system of the present invention.
[FIG. 3] It depicts an explanatory diagram showing an example of source routing.
[FIG. 4] It depicts an explanatory diagram showing an example of changes in an output port list state of a request packet.
[FIG. 5] It depicts an explanatory diagram showing a format of a specific packet by way of example.
[FIG. 6] It depicts an explanatory diagram showing an example of information included in a request packet.
[FIG. 7] It depicts an explanatory diagram showing an example of information included in a reply packet.
[FIG. 8] It depicts an explanatory diagram showing an example of information included in a setup packet.
[FIG. 9] It depicts an explanatory diagram showing an example of information included in a tunnel packet.
[FIG. 10] It depicts an explanatory diagram showing an example of transmitting and receiving specific packets.
[FIG. 11] It depicts a flowchart showing an example of a process flow in the control unit.
[FIG. 12] It depicts a flowchart showing an example of creating topology information.
[FIG. 13] It depicts an explanatory diagram showing an example of paths of reply packets transmitted from ports of each switch.
[FIG. 14] It depicts an explanatory diagram showing the reply packets reaching the control unit through the path s shown in FIG. 13.
[FIG. 15] It depicts a flowchart showing an example of a process flow in one switch.
[FIG. 16] It depicts another flowchart showing an example of a process flow in one switch.
[FIG. 17] It depicts a block diagram showing an example of a minimum configuration of the communication system according to the present invention.
[FIG. 18] It depicts a block diagram showing an example of a minimum control unit configuration in the present invention.
[FIG. 19] It depicts a block diagram showing an example of a minimum packet transfer unit configuration in the present invention.
[FIG. 20] It depicts an explanatory diagram showing an example of a general communication system to which OpenFlow is applied.

### Description of Embodiments

Hereunder, exemplary embodiments of the present invention will be described with reference to the accompanying drawings.

A communication system of the present invention includes a plurality of packet transfer units that each transfer a packet, and a control unit that controls the plurality of switches (packet transfer units). The control unit transmits flow entry information to each packet transfer unit, and the packet transfer unit, upon receiving the packet, processes the packet in accordance with the flow entry information. Upon completion of this sequence, a terminal unit connected to one packet transfer unit can transmit the packet to any other terminal unit connected to another packet transfer unit, via a given path, or broadcast the packet to other terminal units connected to other packet transfer units, via respective paths.

The packet transfer unit in the present invention is, for example, a switch in OpenFlow, and the control unit in the invention is, for example, a controller in OpenFlow. The following describes an example in which the packet transfer unit and the control unit are the switch and the controller, respectively, in OpenFlow. The invention, however, can also be applied to protocols other than OpenFlow; the invention can be applied to any communication system constructed so that the control unit undertakes centralized management of each packet transfer unit present on a communications network.

The communication system of the present invention does not include a control-dedicated communications network between the control unit (controller) and the switch. The control unit needs only to be connected to at least one switch. The control unit provides control channels between each switch and the control unit itself using the communications network that the switches use to transfer packets. More specifically, the control unit uses links of this communications network to form the control channels between the control unit itself and each switch subsequent to the switch connected to the control unit itself, as viewed from the control unit. After this, the control unit communicates with each switch by tunneling via the control channels and controls the switches. In other words, in the present invention, the control unit can be considered as forming overlay networks of a star structure between each switch and the control unit itself by using the communications network that the switches use to transfer packets.

In the communication system of the present invention, the control unit also stores the topology information that includes information on interconnection between the ports of the control unit itself and each switch. Individual switches do not need to store the topology information. The control unit, under its initial state, does not store the topology information, inquires of the switch about a connection state of its ports, and creates the topology information. Upon recognizing the topologies of the switches, the control unit determines for each switch a path that functions as the control channel between the switch and the control unit itself, and transmits a packet to notify the switch of the path leading to the control unit. This enables the control unit to recognize the control channel leading to the switch, and the switch to likewise recognize the control channel leading to the control unit. After this, the switch and the control unit communicate with each other via the control channel by tunneling.

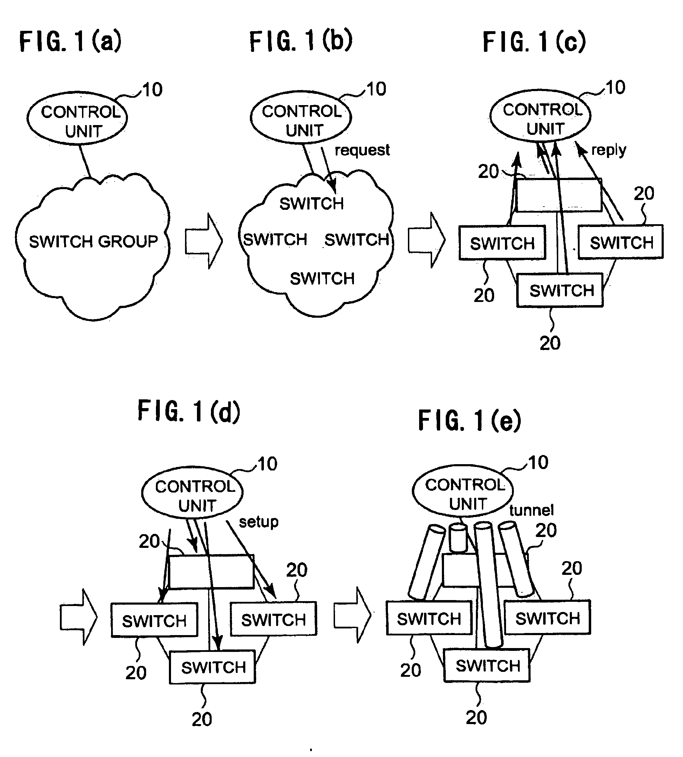

FIG. 1 is an explanatory diagram that schematically shows process steps from the state under which the control unit does not store the topology information, until the control unit and each switch start tunneling-based communication. FIG. 1(a) schematically shows an initial state of the communication system of the present invention. Under this state, the control unit 10, although connected to at least one switch of the switch group, does not recognize to which port of which switch the control unit is connected.

The control unit 10 transmits a request packet inquiring a switch about a port that is linked up, from a port of the control unit itself which is unclear about to which switch the control unit is connected. This state is shown in FIG. 1(b). The port that is linked up is a port connected to any other switch.

Each switch 20 that has received the request packet returns a reply packet from the port of the switch 20 that has been used to receive the request packet, to the control unit 10. This state is shown in FIG. 1(c). The reply packet includes three kinds of information. One kind of information indicates the port in the link-up state, one kind of information indicates the port of the switch that has been used to receive the request packet, and one kind of information indicates the identification of the switch 20 itself.

In the present invention, the control unit 10 generates topology information based on the reply packet, and stores the topology information. However, even after generating the topology information, the control unit 10 once again transmits another request packet to update the topology information according to a particular change in the topology of switches. That is, the control unit 10 repeats request packet transmission to search for the topology of the switches. In addition, the control unit 10 includes information for identifying every single search, in the request packet. In the present exemplary embodiment, an example of discriminating each search by numbers is described below and these numbers are hereinafter referred to as sequence numbers. During one search, when the control unit 10 transmits a request packet from a plurality of ports, the unit sets the same sequence number in each request packet. After this, when request packet transmission is to be repeated for another search, the control unit 10 transmits a request packet including a sequence number different from that of the previous search. However, the sequence numbers in the request packets transmitted from each port during the search are the same as those of the previous search.

The switch 20, after receiving the request packet, transmits the particular request packet from a port other than that through which the request packet has been received. However, the transmission is executed, subject to the fact that the sequence number included in the request packet is that which the switch did not receive before. In other words, request packet flooding takes place. If flooding conditions are defined, traffic of request packets and that of reply packets due to the request packets can be suppressed. By executing flooding, each switch 20 receives an additional request packet through a port other than that through which the switch has received the previous request packet. In that case, the switch 20 also returns a reply packet to the control unit 10 from the port that the switch has used to receive the request packet. In accordance with the reply packets received from each switch 20, the control unit 10 generates the topology information representing the interconnection relationships between the ports of the control unit 10 itself and each switch, and stores the topology information.

The control unit 10 determines the path that operates as the control channel, for each switch in accordance with the topology information. Thus, the control unit 10 recognizes the control channels for each switch. The control unit 10 then transmits a setup packet to notify each switch of the path, or the control channel (see FIG. 1(d)). Each switch 20 that has received the setup packet stores the path, or the control channel extending from the switch 20 itself to the control unit 10, in accordance with the setup packet. This makes the switches 20 able to recognize the respective control channels leading to the control unit 10.

Subsequently, the communication for the control unit 10 to control the switches 20 is conducted by tunneling via the control channels dictated for each switch 20, as shown in FIG. 1(e). For example, if a switch 20 receives a packet not defined in the flow entry information, the switch 20 notifies the control unit 10 of this. At this time, the switch 20 conducts the notification by tunneling via the control channel. Also, the control unit 10 that has received the notification generates new flow entry information and transmits the information to the switch, at which time the control unit 10 transmits the flow entry information by tunneling via the control channel. The packet exchanged between the control unit 10 and the switch 20 by tunneling via the control channel is hereinafter referred to as the tunnel packet.

The request packet, the reply packet, the setup packet, and the tunnel packet are referred to as specific packets. Processing that the switch 20 performs upon the specific packets differs from that of data packets transferred between switches. Upon receiving a data packet exchanged between terminals (not shown), the switch 20 transfers the data packet in accordance with the flow entry information, and if a flow of the data packet is not defined in the flow entry information, notifies the control unit 10 of this fact. The switch 20 conducts no such processing upon the specific packets. Instead, the switch 20 conducts different processing, depending on whether the received packet is the request packet, the reply packet, the setup packet, or the tunnel packet. Each switch assigns priority to specific-packet processing, over data packet processing. The prioritization of specific-packet processing guarantees QoS (Quality of Service) of the communication system.

The specific packets also include an appropriate count value according to the particular number of hops from the transmission source of the packet. This count value is referred to as the port count.

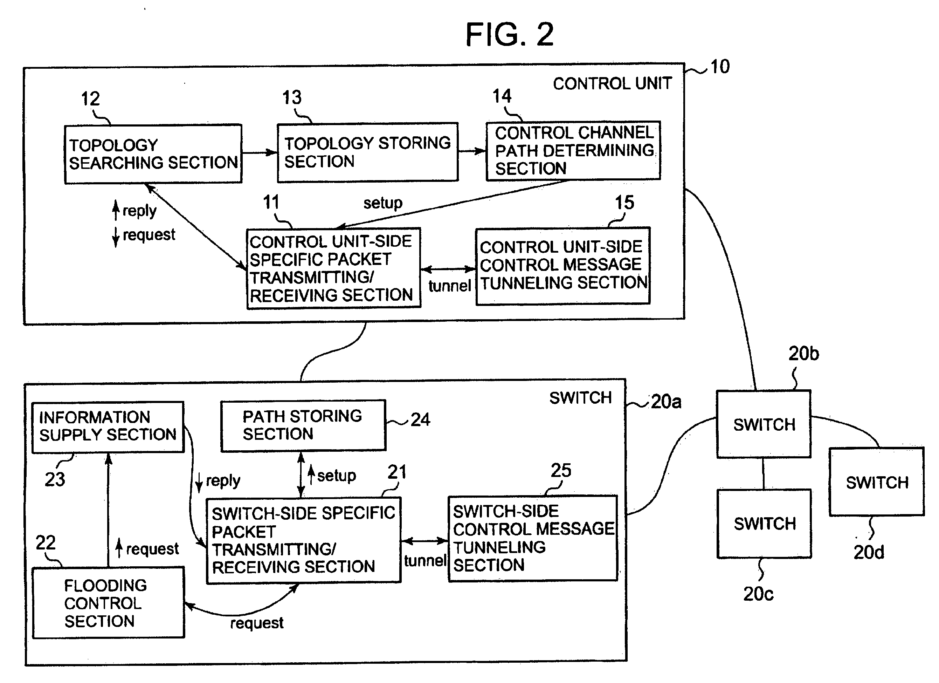

FIG. 2 is a block diagram showing an example of a configuration of the control unit and switches equipped in the communication system of the present invention. While FIG. 2 shows the example in which the communication system has four switches, 20a to 20d, this example does not limit the number of switches and the topology thereof. In addition, although two switches, 20a and 20b, are connected to the control unit 10 in the example of FIG. 2, the number of switches connected to the control unit 10 may be one or three or more; the control unit 10 needs only to have at least one switch connected thereto.

The control unit 10 includes a control unit-side specific packet transmitting/receiving section 11, a topology searching section 12, a topology storing section 13, a control channel path determining section 14, and a control unit-side control message tunneling section 15.

The control unit-side specific packet transmitting/receiving section 11 (hereinafter, referred to simply as the specific packet transmitting/receiving section 11) transmits and receives specific packets. More specifically, the specific packet transmitting/receiving section 11 transmits a request packet and a setup packet, and receives a reply packet. The specific packet transmitting/receiving section 11 further transmits and receives a tunnel packet.

The specific packet transmitting/receiving section 11, upon receiving the reply packet from a switch, outputs the reply packet to the topology searching section 12. The specific packet transmitting/receiving section 11, upon receiving the tunnel packet from a switch, outputs the tunnel packet to the control unit-side control message tunneling section 15.

The setup packet and tunnel packet that the specific packet transmitting/receiving section 11 transmits are sequentially transferred to the switches on the control channel by source routing, and reach the switch to which the packet is addressed. The control channel path determining section 14 that generates the setup packet defines sequentially in the setup packet an output port of the control unit 10 itself and those of each switch on the control channel down to the destination switch, and the specific packet transmitting/receiving section 11 transmits the setup packet from the port of the control unit 10 itself that is first defined in the list of output ports. Similarly, the control unit-side control message tunneling section 15 that generates the tunnel packet to be sent to a switch defines sequentially in the tunnel packet an output port of the control unit 10 itself and those of each switch on the control channel down to the destination switch, and the specific packet transmitting/receiving section 11 transmits the tunnel packet from the port of the control unit 10 itself that is first defined in the list of output ports. Source routing will be described later herein.

In addition, during the generation of a request packet, the topology searching section 12 defines the port of the control unit 10 itself that is to be used to output the request packet. The specific packet transmitting/receiving section 11 transmits the request packet from the port of the control unit 10 itself that is defined in the request packet.

Hereinafter, it will be described for convenience sake that ports are just defined in the specific packet. More specifically, however, information that identifies the ports of the control unit 10 and each switch is defined in the specific packet, and port identification numbers, for example, are the information. The output port list is therefore a list of port identification numbers. An example of using numbers (port identification numbers) as the port identification information, is taken in the following description.

The topology searching section 12 periodically generates a request packet and makes the specific packet transmitting/receiving section 11 transmit the request packet. At this time, the topology searching section 12 defines the port of the control unit 10 itself that is to be used to output the request packet, in the request packet as the output port. The topology searching section 12 also defines length of the output port list (i.e., the number of defined output ports) and an initial value of the port count. In this case, the length of the output port list is 1 since only the port of the control unit 10 itself is the output port. If the control unit 10 has a plurality of ports, the topology searching section 12 generates the request packet for each port. The specific packet transmitting/receiving section 11 transmits each request packet from the ports defined in the request packet.

The topology.searching section 12 periodically generates a request packet as described above. Each time the topology searching section 12 generates a request packet at fixed time intervals, the topology searching section 12 changes the sequence number and defines the new one in the request packet. Generating an independent request packet for each port during one request-packet generating process involves generating a plurality of request packets, in which case, the same sequence number is defined in the plurality of request packets. In the communication system of FIG. 2, the topology searching section 12 defines, for example, "1" as the sequence number at a certain time in the request packets output from each port to which the switches 20a, 20b are connected. The request packets each including sequence number "1" are consequently transmitted to the switches 20a, 20b. After a fixed period, the topology searching section 12 defines sequence number "2" in the request packets output from each port. The request packets each including sequence number "2" are consequently transmitted to the switches 20a, 20b.

In addition, the topology searching section 12 generates topology information based on reply packets obtained from each switch as replies to the request packets. Each switch, upon receiving a request packet having defined therein a sequence number that was not received before, executes flooding with the request packet. This enables the control unit 10 to obtain the reply packets from each switch just by transmitting the request packet to the switch directly connected to the control unit. The topology searching section 12 generates the topology information based on each reply packet, and makes the topology storing section 13 store the topology information.

The topology storing section 13 is a storage device for storing the topology information.

The control channel path determining section 14 refers to the topology information and sets the control channel for each switch. This control channel setting method is not limited. For example, the control channel path determining section 14 may use Dijkstra's algorithm to calculate the shortest path to the switch and set this path as the control channel. The control channel path determining section 14 also generates a setup packet for each switch. At this time, the control channel path determining section 14 defines sequentially in the setup packet an output port of the control unit 10 itself and those of each switch present on the control channel to the setup packet destination switch. The control channel path determining section 14 further defines length of the output port list (i.e., the number of defined output ports) and an initial value of the port count, in the setup packet. After this, the control channel path determining section 14 makes the specific packet transmitting/receiving section 11 transmit the setup packet.

The control unit-side control message tunneling section 15 (hereinafter, referred to simply as the control message tunneling section 15) transmits and receives, by means of tunneling, control messages exchanged between the control unit 10 and switches. That is, the control message tunneling section 15 encodes a control message (e.g., flow entry information) to be transmitted to a switch, and generates an encapsulated tunnel packet. At this time, the control message tunneling section 15 defines an output port of the control unit 10 itself and those of each switch on the control channel to the tunnel packet destination switch, sequentially in the tunnel packet. The control message tunneling section 15 further defines the length of the output port list and an initial value of the port count, in the tunnel packet. After this, the control message tunneling section 15 makes the specific packet transmitting/receiving section 11 transmit the tunnel packet.

In addition, if the specific packet transmitting/receiving section 11 receives the tunnel packet from the switch and then outputs the tunnel packet to the control message tunneling section 15, the control message tunneling section 15 decapsulates the control message included in the tunnel packet and further decodes the control message.

While an example having an initial port count value of 0 is described below in the present exemplary embodiment, the initial value of the port count may be other than 0.

The specific packet transmitting/receiving section 11, the topology searching section 12, the topology storing section 13, the control channel path determining section 14, and the control message tunneling section 15 may each be realized independently.

The specific packet transmitting/receiving section 11, the topology searching section 12, the control channel path determining section 14, and the control message tunneling section 15 may likewise be realized by a CPU of a computer operating in accordance with a program used for the control unit. In this case, a program storage device (not shown) of the computer, for example, may store the control unit-use program, and the CPU may load the program and operate as the specific packet transmitting/receiving section 11, the topology searching section 12, the control channel path determining section 14, and the control message tunneling section 15, in accordance with the program.

Next, switch configurations are described below. The switches 20a to 20d are substantially of the same configuration. The following describes the switch 20a by way of example.

The switch 20a includes a switch-side specific packet transmitting/receiving section 21, a flooding control section 22, an information supply section 23, a path storing section 24, and a switch-side control message tunneling section 25.

The switch-side specific packet
transmitting/receiving section 21 (hereinafter, referred to simply as the specific packet transmitting/receiving section 21) transfers, receives, and transmits specific packets.

The specific packet transmitting/receiving section 21, upon receiving a non-request specific packet, compares the length of the list of output ports defined in the specific packet, with the port count, and determines whether the switch 20a itself is the destination of the specific packet. In the present exemplary embodiment, since the initial value of the port count is 0, if a value obtained by adding 1 to the port count in the received specific packet is the same as the length of the output port list, the specific packet transmitting/receiving section 21 may determine that the switch 20a itself is the destination of the specific packet. If the value obtained by adding 1 to the port count in the received specific packet is smaller than the length of the output port list, the specific packet transmitting/receiving section 21 may determine the switch 20a itself not to be the destination of the specific packet. The length of the output port list is the number of output ports defined in the specific packet. Upon determining the switch 20a itself not to be the destination of the specific packet, the specific packet transmitting/receiving section 21 updates, of all ports defined in the output port list of the specific packet, only the port dictated from the port count, into the port of the switch 20a itself that was used to receive the specific packet. In the present exemplary embodiment, if the value of the port count defined in the specific packet is "k", the (k+1)th port defined in the output port list is updated into the port of the switch 20a itself that was used to receive the specific packet. Additionally, the specific packet transmitting/receiving section 21 identifies the (k+2)th port defined in the output port list, that is, the port immediately following the updated one. This port is where the specific packet is to be transmitted from the switch 20a itself. Furthermore, the specific packet transmitting/receiving section 21 adds 1 to the value of the port count defined in the specific packet. The specific packet transmitting/receiving section 21 next transmits the specific packet from the identified port. The specific packet with the incremented port count is consequently transferred.

After determining the switch 20a itself to be the destination of the specific packet, if the specific packet is a setup packet, the specific packet transmitting/receiving section 21 outputs the setup packet to the path storing section 24; if the specific packet is a tunnel packet, the specific packet transmitting/receiving section 21 outputs the tunnel packet to the switch-side control message tunneling section 25.

The specific packet transmitting/receiving section 21, upon receiving a request packet, outputs the request packet to the flooding control section 22. The flooding control section 22 determines whether to execute flooding with the request packet, then upon determining flooding to be executed, defines a port of the switch 20a itself at an ending position of the output port list in the request packet, and updates the length of the output port list and the port count. The specific packet transmitting/receiving section 21 transmits the request packet updated by the flooding control section 22, from the port of the switch 20a itself that is defined at the end of the output port list.

Furthermore, the specific packet transmitting/receiving section 21 transmits reply packets. As described later herein, the information supply section 23 that generates a reply packet defines, sequentially in the reply packet, the output ports of each switch present on the path from the switch itself to the control unit 10. The specific packet transmitting/receiving section 21 transmits the reply packet from the port of the switch 20a itself that is first defined in the output port list.

The flooding control section 22, upon receiving a request packet from the specific packet transmitting/receiving section 21, determines whether to execute flooding with the request packet. The flooding control section 22 stores the sequence number included in the request packet which has been input from the specific packet transmitting/receiving section 21. If the sequence number included in the newly input request packet is that which was not received before, the flooding control section 22 determines flooding to be executed, or if the sequence number is that which was received before, the flooding control section 22 determines flooding not to be executed. That is, if the sequence number included in the newly input request packet does not agree with any of the stored sequence numbers, the flooding control section 22 determines flooding to be executed, or if the sequence number agrees with either of the stored sequence numbers, the flooding control section 22 determines flooding not to be executed. After the determination, the flooding control section 22 also stores the sequence number included in the request packet.

Upon flooding with the request packet being determined to be executed, in order that the request packet will be transmitted from each port other than the port through which the request packet was received, the flooding control section 22 additionally creates a copy of the request packet for each port other than the receiving port. The flooding control section 22 next defines the output ports from which to transmit the copied request packet, at the end of the output port list in the request packet. The flooding control section 22 further updates, of all ports defined in the output port list, only the port dictated from the port count, into the port of the switch 20a itself that was used to receive the request packet. In the present exemplary embodiment, if the value of the port count defined in the request packet is "k", the (k+1)th port defined in the output port list is updated into the port of the switch 20a itself that was used to receive the request packet. Upon completion of the update operation, the other switches that have received the request packet as a result of flooding become able to transmit a reply packet to the control unit 10 by source routing. Furthermore, the flooding control section 22 adds 1 to the values of the output port list length and port count defined in the request packet. The flooding control section 22 conducts this process upon each request packet copied for each port. The flooding control section 22 makes the specific packet transmitting/receiving section 21 transmit the request packet whose output port list, output port list length, and port count have thus been updated, from the ports corresponding to the request packet.

Irrespective of whether flooding is to be conducted, the flooding control section 22 outputs, directly to the information supply section 23, the request packet that has been input from the specific packet transmitting/receiving section 21. That is, the flooding control section 22 outputs the request packet that the switch has received, to the information supply section 23 intact.

Upon receiving the request packet from the flooding control section 22, the information supply section 23 creates a reply packet that includes the information relating to the linked-up port of the switch 20a itself, the information indicating the port of the switch 20a that has been used to receive the request packet, and identification information on the switch 20a. The information supply section 23 additionally defines, sequentially in the reply packet, the output ports of each switch present on the path from the switch itself to the control unit 10. The following describes how the output port list is dictated. That is, the information supply section 23 updates the last port in the output port list, defined in the request packet that has been input, into the port of the switch that has been used to receive the request packet. Furthermore, the information supply section 23 reverses the order in which the ports were rearranged in the updated output port list, and defines the rearranged output port list in the reply packet. The information supply section 23 further defines the length of the output port list and the initial value of the port count, in the reply packet, and then makes the specific packet transmitting/receiving section 21 transmit the reply packet. As a result, the switch transmits, from the port where the request packet has been received, the reply packet as a reply to the request packet.

However, the information supply section 23 does not generate a reply packet in a certain case, which is described below. The control unit 10 periodically transmits a request message. In the past, upon receiving a request packet from the control unit 10, the information supply section 23 has transmitted a reply packet corresponding to that request frame. The reply packet that the information supply section 23 is to transmit this time could be the same as that transmitted following the reception of a previous request packet during the past periodical transmission of request packets from the control unit 10. If that is the case, the information supply section 23 does not transmit the current reply packet. More specifically, after reply packet transmission in reply to a past request packet, only if the switch currently connected to the switch of interest is replaced by any other switch or disconnected, will the information supply section 23 transmit a reply packet corresponding to a request packet newly received.

The path storing section 24, upon a setup packet being input thereto from the specific packet transmitting/receiving section 21, stores the path that functions as the control channel extending from the setup packet to the control unit 10. More specifically, the path storing section 24 updates the last port in the output port list defined in the setup packet that has been input, into the port of the switch that has been used to receive the setup packet. Additionally, the path storing section 24 reverses the order in which the ports were rearranged in the updated output port list, and stores the rearranged output port list as the information that indicates the path information as the control channel.

The switch-side control message tunneling section 25 (hereinafter, referred to simply as the control message tunneling section 25) transmits and receives, by tunneling, the control messages exchanged between the control unit 10 and switches. In other words, the control message tunneling section 25 encodes a control message to be transmitted to the control unit 10 (e.g., a message indicating that a packet not defined in flow entry information has been received), and generates an encapsulated tunnel packet. At this time, the control message tunneling section 25 reads from the path storing section 24 the output port list representing the control channel to the control unit 10, and defines this output port list in the tunnel packet. The control message tunneling section 25 further defines the length of the output port list and the initial value of the port count, in the tunnel packet. After this, the control message tunneling section 25 makes the specific packet transmitting/receiving section 21 transmit the tunnel packet.

In addition, upon the tunnel packet being input to the control message tunneling section 25 from the specific packet transmitting/receiving section 21, the control message tunneling section 25 decapsulates the control message (e.g., flow entry information) included in the tunnel packet, and decodes the control message.

The specific packet transmitting/receiving section 21, the flooding control section 22, the information supply section 23, the path storing section 24, and the control message tunneling section 25 may each be realized independently.

The specific packet transmitting/receiving section 21, the flooding control section 22, the information supply section 23, the path storing section 24, and the control message tunneling section 25 may likewise be realized by a CPU of a computer operating in accordance with a program used for the packet transfer units. In this case, a program storage device (not shown) of the computer, for example, may store the program for the packet transfer units, and the CPU may load the program and operate as the specific packet transmitting/receiving section 21, the flooding control section 22, the information supply section 23, the path storing section 24, and the control message tunneling section 25, in accordance with the program.

Next, source routing in the present invention is described below. Source routing is a packet transfer method in which a node to operate as a transmission source defines a communications path in a packet and a relay node transfers the packet in accordance with the communications path defined therein. In source routing, there is no need for the relay node to store previously provided path information. The communication system of the present invention defines in a specific packet the output port list representing a sequential array of output ports from which individual nodes are to transmit the specific packet. The control unit 10 and each switch implement source routing by transmitting specific packets from the ports defined in the output port list. The control unit 10 and each switch determine at what position in the output port list the output port relating to the local node is defined, by the port count. The following describes a more specific example of source routing.

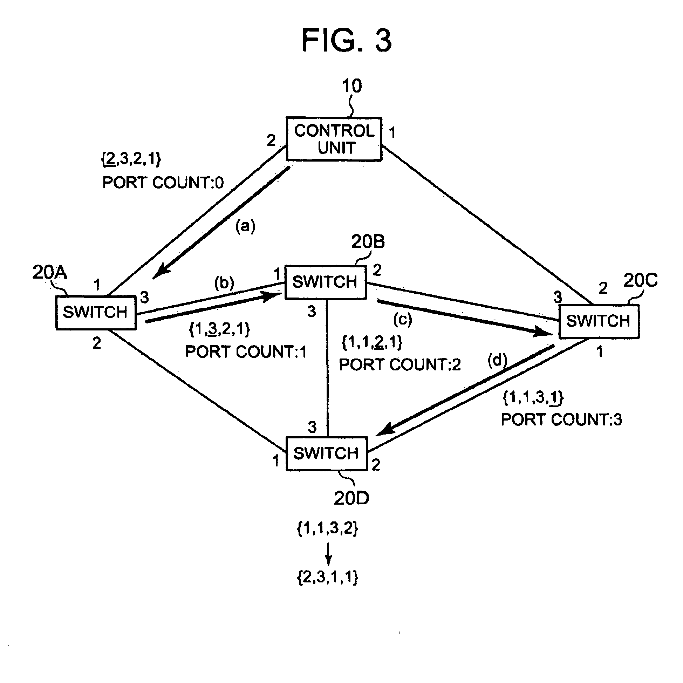

FIG. 3 is an explanatory diagram showing an example of source routing applied when the control unit transmits a setup packet to switches. For simplicity of description, however, the topology of the switches shown in FIG. 3 is made different from the topology shown in FIG. 2. The switches 20A to 20D in FIG. 3 are substantially of the same configuration as that of the switches 20a to 20d in FIG. 2. In addition, the reference numbers shown near the control unit 10 and switches 20A to 20D in FIG. 3 denote port identification numbers assigned to each unit. The port whose port identification number is "n" is expressed with "#n" in the following description.

In this example, the control unit 10 transmits the setup packet to the switch 20D, the destination. In the example, the control unit 10 first sets the port count to have an initial value of 0 and transmits the setup packet with an output port list of {2, 3, 2, 1} defined therein. Since the first port number in this output port list is "2", the control unit 10 transmits the setup packet from port #2 of the control unit 10. This state is shown in FIG. 3(a).

The switch 20A uses port #1 to receive the setup packet. Since the value of the port count is 0, the switch 20A next updates the first port identification number in the output port list into the port identification number of port #1 where the setup packet has been received. In addition, since the value of the port count is 0, the switch 20A also determines that the port from which to transmit the setup packet is defined at the second position in the output port list, and identifies port identification number "3" defined in the second position. After this, the switch 20A updates the value of the port count from 0 to 1 and transmits the setup packet from port #3 of the switch 20A. The output port list that has thus been defined in the setup packet is {1, 3, 2, 1}. This state is shown in FIG. 3(b).

The switch 20B uses port #1 to receive this setup packet. Since the value of the port count is 1, the switch 20B next updates the second port identification number in the output port list into the port identification number of port #1 where the setup packet has been received. In addition, since the value of the port count is 1, the switch 20B also determines that the port from which to transmit the setup packet is defined at the third position in the output port list, and identifies port identification number "2" defined in the third position. After this, the switch 20B updates the value of the port count from 1 to 2 and transmits the setup packet from port #2 of the switch 20B. The output port list that has thus been defined in the setup packet is {1, 1, 2, 1}. This state is shown in FIG. 3(c).

The switch 20C uses port #3 to receive this setup packet. Since the value of the port count is 2, the switch 20C next updates the third port identification number in the output port list into the port identification number of port #3 where the setup packet has been received. In addition, since the value of the port count is 2, the switch 20C also determines that the port from which to transmit the setup packet is defined at the fourth position in the output port list, and identifies port identification number "1" defined in the fourth position. After this, the switch 20C updates the value of the port count from 2 to 3 and transmits the setup packet from port #1 of the switch

20C. The output port list that has thus been defined in the setup packet is {1, 1, 3, 1}. This state is shown in FIG. 3(d).

The switch 20D uses port #2 to receive this setup packet. Since the value of the port count is 3 and the number of port identification numbers in the output port list is four, the switch 20D next determines that the switch 20D itself is the destination. The switch 20D also updates the last port identification number "1" in the {1, 1, 3, 1} output port list of the setup packet, into the port identification number of port #2 where the setup packet has been received. The output port list becomes {1, 1, 3, 2} as a result. The switch 20D rearranges the output port list in reverse order, and stores the rearranged output port list of {2, 3, 1, 1} as the output port list that represents the control channel leading to the control unit 10.

When the control unit 10 transmits a tunnel packet addressed to the switch 20D and including output port list {2, 3, 2, 1}, the switches 20A to 20C also operate similarly to the switch 20D described above. The switch 20D receives the tunnel packet as a result. However, the switch 20D does not need to conduct output port list processing in the tunnel packet.

The examples in which the control unit 10 transmits the setup packet or tunnel packet addressed to the switch 20D have been described and shown. For transmission of packets addressed to other switches, each switch also operates in substantially the same manner as that described above.

In addition, when each switch defines in a tunnel packet the output port list prestored as the control channel leading to the control unit 10 and transmits the tunnel packet, other switches operate similarly to the above and sequentially transfer the tunnel packet to the control unit 10.

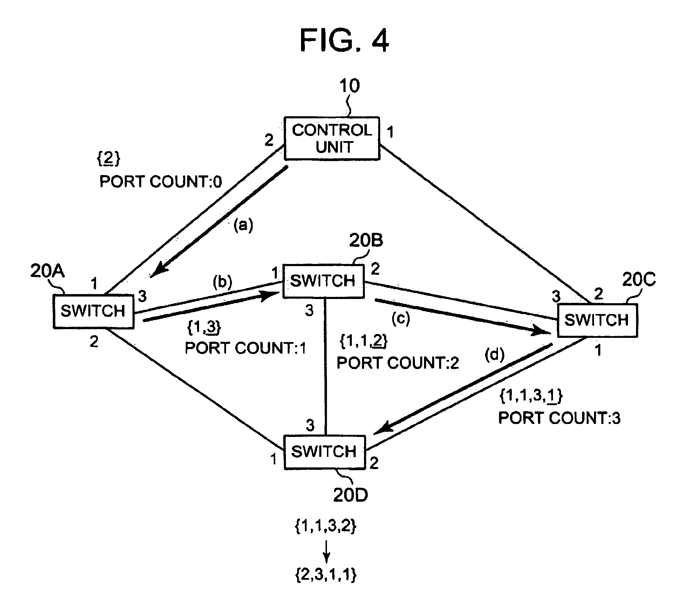

Next, an example in which the output port list in a request packet transmitted from the control unit 10 is updated is described below. FIG. 4 is an explanatory diagram that shows changes in a state of the output port list in the request packet. The following description applies to an example in which the request packet that the control unit 10 has transmitted from port #2 passes through the switches 20A, 20B, 20C and reaches the switch 20D.

The control unit 10 assigns the initial value 0 to the port count and transmits from port #2 the request packet having an output port list of {2} defined therein, as shown in FIG. 4(a). The control unit 10 also outputs from port #1 a request packet having an output port list of {1} defined therein, but description of this request packet is omitted.

The switch 20A receives through port #1 the request packet transmitted from port #2 of the control unit 10. In the switch 20A, two ports exist in addition to port #1, so the switch 20A creates two copies of the request packet. Of the two copies, only the request packet that will be transmitted from port #3 is described below. The switch 20A adds the port identification number of port #3 to an end of the output port list in the request packet that will be transmitted from port #3. In addition, since the port count in the request packet is 0, the switch 20A updates the first port identification number in the output port list into the port identification number of port #1 through which the request packet has been received. As a result, the output port list changes to {1, 3}. The switch 20A updates the value of the port count from 0 to 1 and transmits from port #3 the request packet that includes output port list {1, 3}. This state is shown in FIG. 4(b).

The switch 20B receives this request packet through port #1. In the switch 20B, two ports exist in addition to port #1, so the switch 20B creates two copies of the request packet. Of the two copies, only the request packet that will be transmitted from port #2 is described below. The switch 20B adds the port identification number of port #2 to the end of the output port list in the request packet that will be transmitted from port #2. In addition, since the port count in the request packet is 1, the switch 20B updates the second port identification number in the output port list into the port identification number of port #1 through which the request packet has been received. As a result, the output port list changes to {1, 1, 2}. The switch 20B updates the value of the port count from 1 to 2 and transmits from port #2 the request packet that includes output port list {1, 1, 2}.

The switch 20C receives this request packet through port #3. In the switch 20C, two ports exist in addition to port #3, so the switch 20C creates two copies of the request packet. Of the two copies, only the request packet that will be transmitted from port #1 is described below. The switch 20C adds the port identification number of port #1 to the end of the output port list in the request packet that will be transmitted from port #1. In addition, since the port count in the request packet is 2, the switch 20C updates the third port identification number in the output port list into the port identification number of port #3 through which the request packet has been received. As a result, the output port list changes to {1, 1, 3, 1}. The switch 20C updates the value of the port count from 2 to 3 and transmits from port #1 the request packet that includes output port list {1, 1, 3, 1}.

The switch 20D receives this request packet through port #2. The switch 20D updates the last port identification number in the output port list {1, 1, 3, 1} defined in the request packet, into the port identification number of port #2 through which the request packet has been received. As a result, the output port list changes to {1, 1, 3, 2}. The switch 20D rearranges the output ports within the output port list, in reverse order, and after defining this output port list of {2, 3, 1, 1} in a reply packet, transmits the reply packet from port #2 corresponding to the first position in {2, 3, 1, 1}. The operation of other switches upon receiving the reply packet is substantially the same as upon receiving a setup packet or a tunnel packet. The reply packet in that case finally reaches the control unit 10.

Furthermore, the control unit 10, upon receiving the reply packet, updates the last port identification number in the output port list defined in the reply packet, into the identification number of the port through which the reply packet has been received. After the update operation, the control unit 10 rearranges the output ports within the output port list, in reverse order. The control unit 10 next refers to this output port list and generates topology information.

While the situation that the switches 20A to 20C transfer request packets and the switch 20D transmits a reply packet has been described, the switch 20D also transfers the request packet similarly to the other switches. Conversely, the switches 20A to 20C also transmit the reply packets similarly to the switch 20D.

Description was given in FIGS. 3 and 4 taking the initial port count value of 0 by way of example. A method for each switch to determine what number port identification number in the output port list is to be updated, or a method for each switch to determine from which port the specific packet is to be transferred can be preset according to the particular initial value of the port count. A method in which the switch that has received the specific packet determines whether the switch itself is the destination can also be preset according to the particular initial value of the port count.

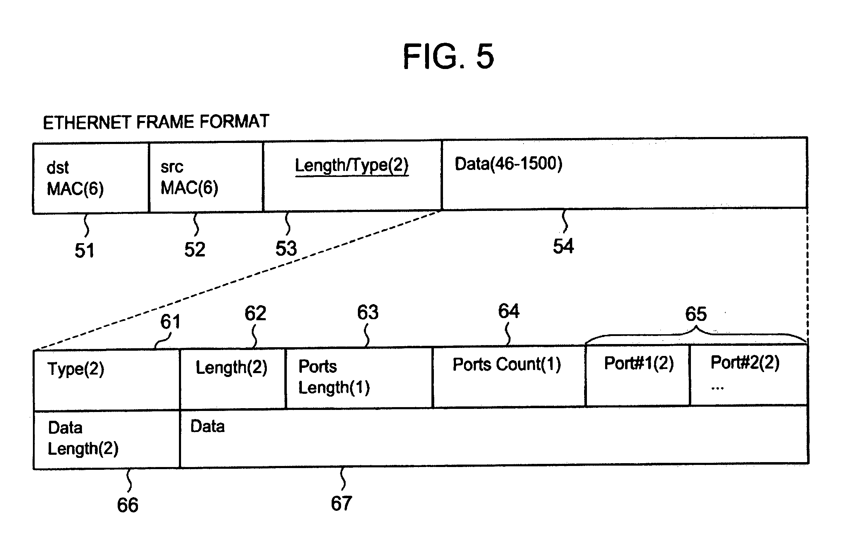

Next, examples of a format of the specific packets are described below. FIG. 5 shows an example of a specific-packet format. The example shown in FIG. 5 relates to realizing a specific packet in the format of the Ethernet frame (Ethernet: registered trademark). The values shown in parenthesized form in FIG. 5 denote the number of bytes. A destination MAC address 51 and a source MAC address 52 are provided in the Ethernet frame format. The communication system of the present invention, however, does not use these addresses to send/receive the specific packets. Instead, the communication system of the invention transmits the specific packets by source routing, as described in the present exemplary embodiment. In the specific packets of the Ethernet frame format, a value indicating that the packet is a specific packet is stored into type identification information 53. When the control unit 10 or each switch generates a specific packet, the value indicating that the packet is a specific packet is stored into the type identification information 53. In addition, when the control unit 10 or each switch receives a packet, each determines the received packet to be a specific packet, subject to the fact that the value indicating that the packet is a specific packet is stored within the type identification information 53.

Data 54 of the Ethernet frame format includes a type code 61 that identifies the kind of specific packet. The data 54 also includes first data length 62, length 63 of the output port list, a port count 64, the output port list 65, second data length 66, and data 67 of the specific packet. To discriminate from the type identification information 53 in the Ethernet frame format, the type code 61 identifying the kind of specific packet will be hereinafter referred to simply as the type 61. In addition, to discriminate from the data 54 in the Ethernet frame format, data 67 of the specific packet will be referred to as the specific packet data 67. Data length of entire information subsequent to the first data length 62 (shown as "Length" in FIG. 5) is stored into the first data length 62. Data length of entire information subsequent to the second data length 66 (shown as "DataLength" in FIG. 5) is stored into the second data length 66.

The length 63 (shown as "PortsLength" in FIG. 5) of the output port list is the number of ports included in the output port list. More specifically, the length 63 is the number of port identification numbers included in the output port list.

The port count 64 (shown as "PortsCount" in FIG. 5) is a count value dictated by the number of hops from the transmission source of the specific packet.

The port identification numbers are stored in an arranged form within the output port list 65.

The data 54 in the Ethernet frame format may include items other than those shown in FIG. 5. The request packet, for example, includes a sequence number(s). Examples of the information included in the data 54 of the Ethernet frame format are described below for each kind of specific packet. However, description is omitted of the first data length 62, the length 63 of the output port list, the port count 64, the output port list 65, and the second data length 66.

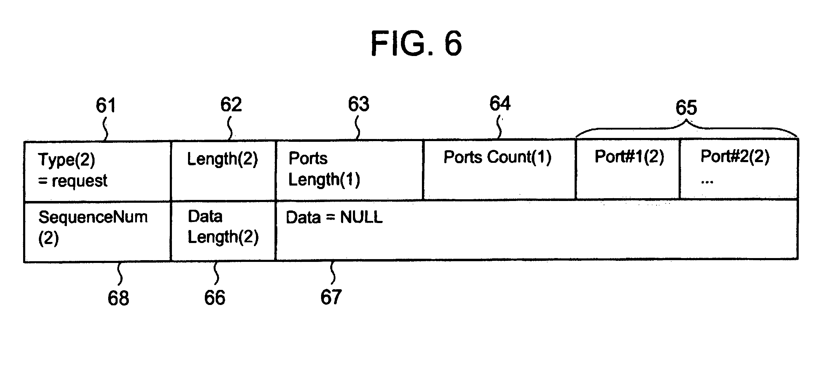

FIG. 6 is an explanatory diagram showing an example of the information included in a request packet. The value indicating that the packet is a request packet is stored into the type code 61. The control unit 10, upon generating a request packet, stores the value indicating that the packet is a request packet, into the type code 61. In addition, each switch, upon receiving a packet, determines the received packet to be a request packet, subject to the fact that the value indicating that the packet is a request packet is stored within the type code 61.

The sequence number is stored into "SequenceNum" 68 shown in FIG. 6. The control unit 10 stores a value of the sequence number into "SequenceNum" 68 during the generation of the request packet.

The specific packet data 67 is NULL for request packets.

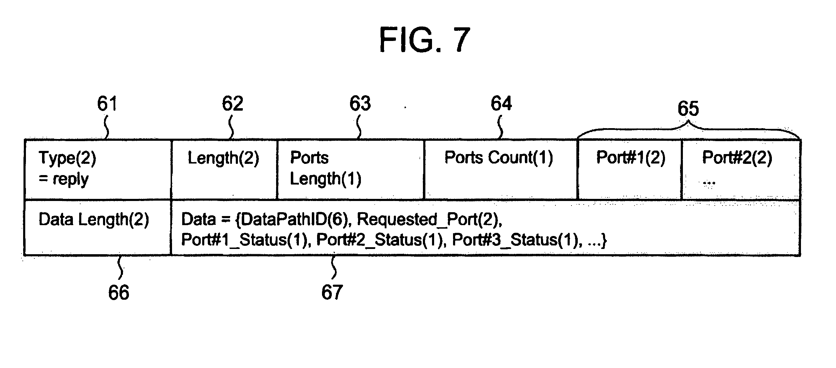

FIG. 7 is an explanatory diagram showing an example of the information included in a reply packet. The value indicating that the packet is a reply packet is stored into the type code 61. Each switch, upon generating a reply packet, stores the value indicating that the packet is a reply packet, into the type code 61. In addition, the control unit 10 and each switch, upon receiving a packet, determine the received packet to be a reply packet, subject to the fact that the value indicating that the packet is a reply packet is stored within the type code 61.

For the reply packet, information denoting a port that is linked up, information denoting the port of the switch that has been used to receive the request packet, and information identifying the switch that is to transmit the reply packet are stored into the specific packet data 67. During reply packet creation, the switch to transmit the reply packet stores the three kinds of information into the specific packet data 67. In the example of FIG. 7, "DataPathID" corresponds to the switch identification information. Also, "Requested_Port" corresponds to the request packet receiving port. In addition, "Port#n_Status" represents whether the port with a port identification number of "n" is linked up. For example, the switch can define a value of "Port#n_Status" for each port so that "Port#n_Status" equals 1 for the port that is linked up, and so that "Port#n_Status" equals 0 for other ports that are not linked up. The port that is linked up can then be located from the set of "Port#n_Status" values defined on a port-by-port basis. However, other representing methods may be used to define the port that is linked up.

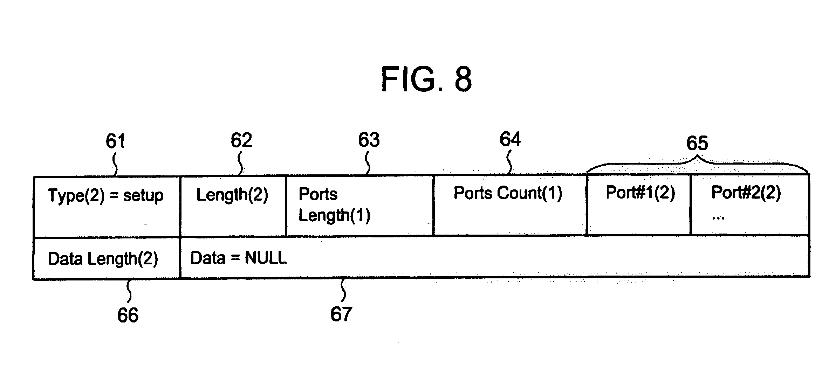

FIG. 8 is an explanatory diagram showing an example of the information included in a setup packet. The value indicating that the packet is a setup packet is stored into the type code 61. The control unit 10, upon generating a setup packet, stores the value indicating that the packet is a setup packet, into the type code 61. In addition, each switch, upon receiving a packet, determines the received packet to be a setup packet, subject to the fact that the value indicating that the packet is a setup packet is stored within the type code 61.

The specific packet data 67 is NULL for setup packets.

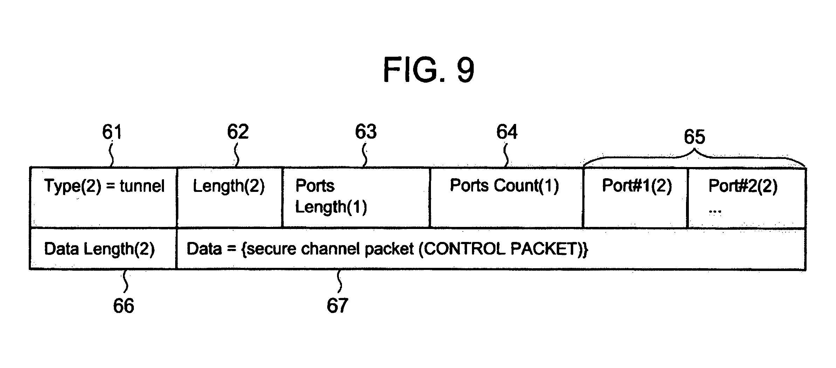

FIG. 9 is an explanatory diagram showing an example of the information included in a tunnel packet. The value indicating that the packet is a tunnel packet is stored into the type code 61. The control unit 10 and each switch, upon generating a tunnel packet, store the value indicating that the packet is a tunnel packet, into the type code 61. In addition, the control unit 10 and each switch, upon receiving a packet, determine the received packet to be a tunnel packet, subject to the fact that the value indicating that the packet is a tunnel packet is stored within the type code 61.

The tunnel packet has a control message stored into the specific packet data 67. More specifically, a control packet exchanged as the control message in a general communication system of the OpenFlow scheme is stored into the packet data 67. In the communication system of the present invention, a control message is also exchanged between the control unit and each switch, as so done in a general communication system.

The following describes operation.

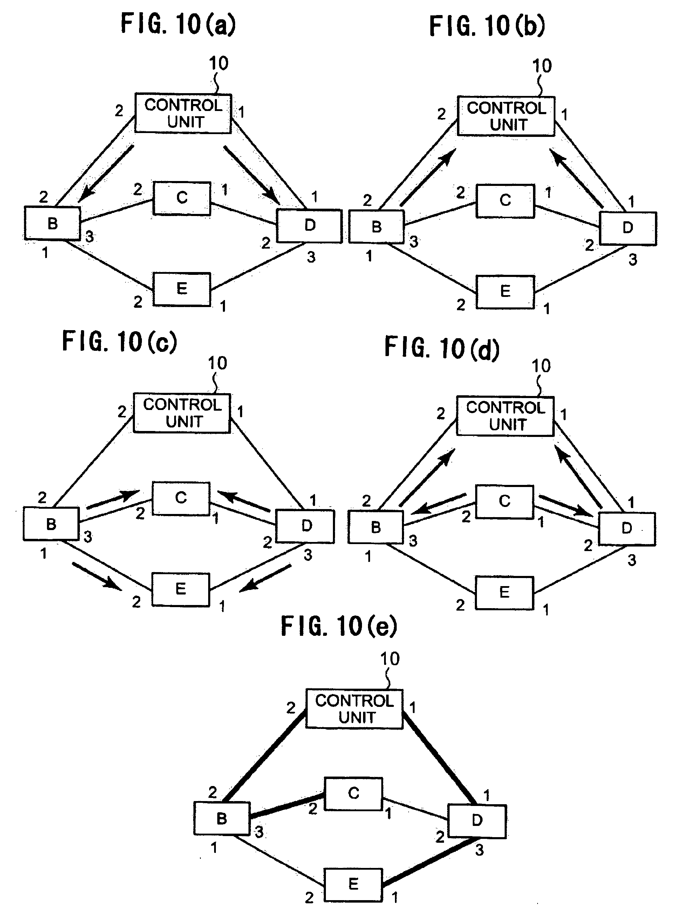

FIG. 10 is an explanatory diagram showing an example of transmitting and receiving specific packets. In the example of FIG. 10, the communication system includes the control unit 10 and switches B to E. Also, numerals shown near the control unit 10 and switches B to E signify port identification numbers.

The control unit 10 transmits a request packet from port #1 and port #2, as shown in FIG. 10(a). The sequence numbers included in this request packet are the same, which is "P" in the example here. Switches B, D both receive the request packet and then transmit a reply packet to the control unit 10, as shown in FIG. 10(b). At this time, switches B, D transmit the reply packet from the ports through which the switches have received that request packet. In addition, upon receiving for the first time the request packet having sequence number "P" defined therein, switches B, D each transmit the request packet from a port other than that through which the request packet has been received. This transmission state is shown in FIG. 10(c).

Switch C receives the request packet from switches B, D. In reply to the request packet, switch C next transmits a reply packet to the control unit 10 from the port through which the request packet has been received. This transmission state is shown in FIG. 10(d). Upon receiving for the first time the request packet having sequence number "P" defined therein, switch C transmits the particular request packet from a port other than that through which the request packet has been received. The same also applies to switch E.

In this manner, each switch, upon receiving a request packet, transmits a reply packet from the request packet receiving port to the control unit 10. In addition, each switch, upon receiving for the first time the request packet having sequence number "P" defined therein, executes flooding with the particular request packet. This makes the control unit 10 receive the reply packet transmitted from each port of each switch, and generate the topology information based on the reply packet. The control unit 10 further sets the control channels leading to each switch, in accordance with the topology information. This transmission state is shown in FIG. 10(e). Although the control channels that the control unit 10 has set for switches C, E are shown by way of example in FIG. 10(e), these control channels for switches C, E are not limited to the control channels shown in FIG. 10(e).

Operation of the control unit and switches is detailed below.

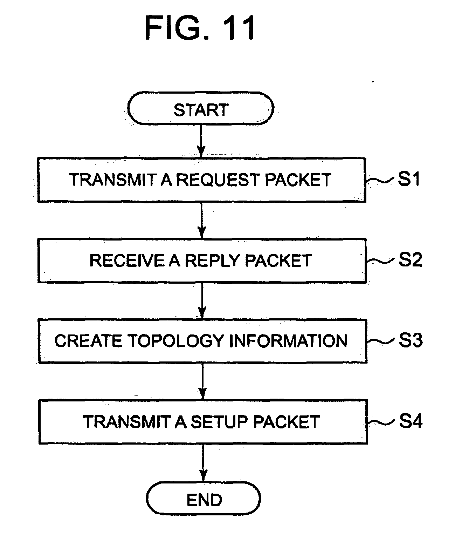

FIG. 11 is a flowchart showing an example of a process flow in the control unit 10. First, the topology searching section 12 of the control unit 10 generates a request packet and makes the specific packet transmitting/receiving section 11 transmit the request packet (step S1). In step S1, the topology searching section 12 generates the request packet for each port of the control unit 10. The topology searching section 12 next defines, as the output port list in each generated request packet, only the port identification numbers of the ports from which the particular request packet is to be transmitted. The topology searching section 12 also defines 1 as length of the output port list, and 0 as the initial value of the port count. The topology searching section 12 further defines a sequence number common to each request packet to be transmitted from each port. The specific packet transmitting/receiving section 11 transmits the request packet from the ports corresponding to the port identification numbers defined in the output port list.

Each switch executes request packet flooding, subject to the fact that the sequence number included in the received request packet is a sequence number that the switch did not receive before. By executing the flooding process, each switch also receives the request packet through not only one port, but also each port that is linked up, and then transmits a reply packet from each linked-up port to the control unit 10.

After this, the control unit 10 receives the reply packet transmitted from the linked-up port of each switch (step S2). In step S2, the specific packet transmitting/receiving section 11 updates the last port identification number in the output port list defined in the received packet, into the identification number of the port through which the reply packet has been received. After the update operation, the specific packet transmitting/receiving section 11 rearranges the port identification numbers within the output port list, in reverse order. The specific packet transmitting/receiving section 11 next outputs the edited reply packet to the topology searching section 12.

The topology searching section 12 refers to the reply packets thus transmitted from the respective ports of the switches, and creates topology information (step S3). Since the output port lists in each reply packet were updated or rearranged in step S2, the output port lists represent the paths from the control unit 10 to the reply packet transmission source switches. The topology searching section 12 views the output port lists and the information defined in the reply packets by the switches, creates topology information, and makes the topology storing section 13 store the topology information. The creation of the topology information will be described in further detail on later pages hereof.

After step S3, the control channel path determining section 14 refers to the topology information stored within the topology storing section 13, and sets the control channels leading to each switch. This setting method is not limited. For example, the control channel path determining section 14 may calculate the shortest path to each switch and set this path as the control channel. The control channel path determining section 14 generates, for each switch, a setup packet having an output port list defined therein to represent the control channel to the switch. The control channel path determining section 14 also defines the initial port count value of 0 and length of the output port list, in the setup packet. The control channel path determining section 14 makes the specific packet transmitting/receiving section 11 transmit the setup packet that has been generated for each switch (step S4). At this time, the specific packet transmitting/receiving section 11 transmits the setup packet from the first port defined in the output port list of the setup packet.

The switch, upon receiving the setup packet, uses the setup packet to identify the control channel to the control unit 10, and stores the channel. This enables the control unit 10 and each switch to recognize the control channel. When the control unit 10 transmits a control message, the control message tunneling section 15 generates a tunnel packet by encoding and encapsulating the control message. At this time, the control message tunneling section 15 defines the output port list representing the control channel, length of the output port list, and the initial port count value of 0, in the tunnel packet. After this, the control message tunneling section 15 makes the specific packet transmitting/receiving section 11 transmit the tunnel packet. The specific packet transmitting/receiving section 11 transmits the tunnel packet from the first port defined in the output port list of the tunnel packet. In the case that the switch transmits the control message, the control message tunneling section 25 and the specific packet transmitting/receiving section 21 operate similarly to the above.

In addition, upon the control unit 10 receiving the tunnel packet from the switch, the control message tunneling section 15 decapsulates the control message and decodes the decapsulated control message. The control unit 10 then performs a process appropriate for the decoded control message.

Furthermore, the control unit 10 periodically executes process step S1 onward. At this time, the topology searching section 12 changes the sequence number each time step S1 is executed at fixed periods. After step S1 of the second and subsequent process cycles, only switches that have changed in connection state transmit a reply packet. The topology searching section 12 creates topology information in step S3 of the first cycle. In step S3 of the second and subsequent process cycles, the topology searching section 12 uses the received reply packet to update the topology information stored within the topology storing section 13.

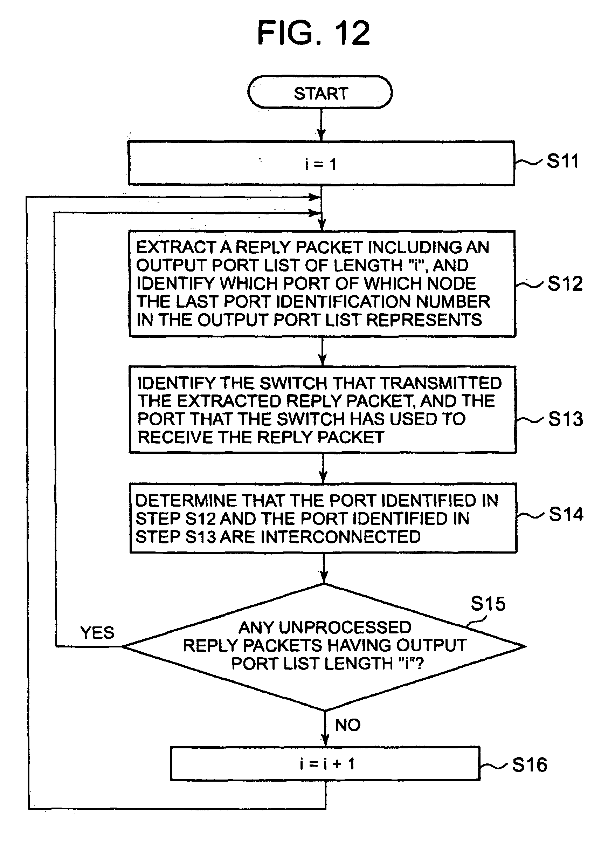

Next, topology information creation (step S3) is described below. FIG. 12 is a flowchart showing an example of creating topology information. This example assumes that the control unit 10 has already received reply packets transmitted from each linked-up port of each switch and that the specific packet transmitting/receiving section 11 has already conducted output port list updating and rearranging operations upon each reply packet.

The topology searching section 12 assigns 1 to a variable "i" (step S11). The variable "i" is used to specify length of the output port list.

The topology searching section 12 extracts one reply packet equal to "i" in the length of the output port list. Next, the topology searching section 12 identifies which port of which node the last port identification number in the output port list of that reply packet represents (step S12). If i=1, the topology searching section 12 identifies the port corresponding to the particular port identification number in the control unit 10. If i>2, the topology searching section 12 traces each switch in order from the first port identification number in the output port list and identifies the switch to which the last port identification number in the output port list belongs. The topology searching section 12 next identifies the port corresponding to the particular port identification number of that switch. The topology searching section 12 refers to the reply packets in descending order of the output port list length and creates the topology information. This enables the topology searching section 12 to trace each switch in order from the first port identification number in the output port list.

Next, the topology searching section 12 identifies the switch that transmitted the reply packet extracted in step S12, and the port that the switch used to transmit the reply packet (step S13). The port that the switch used to transmit the reply packet is the same as the port that the switch used to receive the request packet, and the identification number of this port is defined in the reply packet. The information identifying the switch which transmitted the reply packet is also defined therein. By reading the definitions in the reply packet, the topology searching section 12 can identify the reply packet transmission source switch and the port that the switch used to transmit the reply packet.

Next, the topology searching section 12 determines that the port that was identified in step S12 and the port of the switch that was identified in step S13 are interconnected, and makes the topology storing section 13 store the interconnection relationship (step S14).

In next step S15, the topology searching section 12 determines presence of another reply packet equal to "i" in the length of the output port list and not having been subjected to the process of steps S12 to S14. If such a reply packet exists ("Yes" in step S15), the topology searching section 12 repeats the process of step S12 onward.

If no such reply packets exist, the topology searching section 12 adds 1 to the value of the variable "i" (step S16) and repeats the process of step S12 onward.

The creation of topology information by the topology searching section 12 is completed, for example, when the process of steps S12 to S14 for all reply packets is executed to completion. A set formed by combining a plurality of inter-port connection relationships such as the interconnection relationship between the ports identified in step S14 is the topology information.

In step S2 of the second and subsequent process cycles (see FIG. 11), the control unit 10 receives a reply packet only from the switches whose interconnection relationships have changed with respect to an adjacent switch. In this case, the topology searching section 12 updates the topology information in the manner to be described below. This update operation assumes that the specific packet transmitting/receiving section 11 has conducted output port list updating and rearranging operations upon each reply packet.

The topology searching section 12 sorts the reply packets in descending order of the output port list length. After this, the topology searching section 12 conducts the process of steps S12 to S14 upon the reply packets, with the packet of the shortest output port list first.

At this time, if port information on other switches to be connected to the ports identified in step S12 is included in the topology information, the topology searching section 12 deletes therefrom the information indicating the interconnection relationships between switches posterior to those switches, and executes the process of steps S13, S14. This updates the topology information.

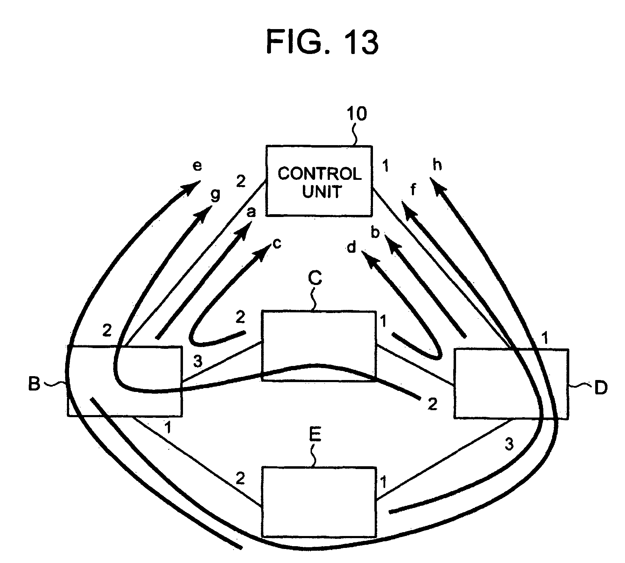

A more specific example of creating topology information is described below. FIG. 13 shows an example of paths of the reply packets transmitted from each port of each switch. The example in FIG. 13 shows the same topology as that of FIG. 10. Numbers shown near the control unit 10, for example, signify port identification numbers. In addition, paths "a" to "h", marked with an arrow, are those of the reply packets transmitted from each port of each switch.

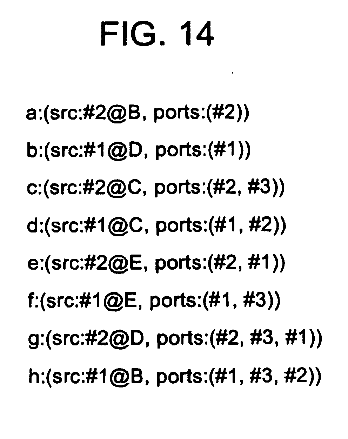

FIG. 14 shows the reply packets reaching the control unit 10 through paths "a" to "h" in FIG. 13. In FIG. 14, "src:#2@B", for example, represents the switch that transmitted the reply packet, and the port that the switch used. The number that follows "#" is the port identification number, and the symbol that follows "@" is the information identifying the switch. For example, "src:#2@B" means that the reply packet was transmitted from port #2 of switch B. In addition, "ports: ()" signifies the output port list. In step S2, however, the specific packet transmitting/receiving section 11 updates the last port identification number in the output port list defined in the received packet, into the port identification number of the port through which the reply packet has been received, and further rearranges the port identification numbers within the output port list, in reverse order. The output port list shown in FIG. 14 is that existing after the updating and rearranging operations have been conducted. Hereinafter, each reply packet shown in FIG. 14 will be expressed with the same symbol as that of the path which the reply packet follows to reach the control unit 10. For example, the reply packet that passed through path "a" shown in FIG. 13 will be termed reply packet "a".

The topology searching section 12 sets "i=1" (step S11) and conducts the process of steps S12 to S14 for reply packets "a", "b".

The topology searching section 12 identifies that the last port identification number "2" in the output port list of reply packet "a" is port #2 of the control unit 10 (step S12). The topology searching section 12 further determines reply packet "a" to have been transmitted from port #2 of switch B (step S13). The topology searching section 12 next determines that port #2 of the control unit 10 and port #2 of switch B are connected to each other(step S14).

Similarly, the topology searching section 12 uses reply packet "b" to determine that port #1 of the control unit 10 and port #1 of switch D are interconnected.

Next, the topology searching section 12 sets "i=2" (see step S16) and conducts the process of steps S12 to S14 for reply packets "c", "d", "e", "f".

The topology searching section 12 identifies that the last port identification number "3" in the output port list of reply packet "c" is port #3 of switch B (step S12). Since the output port list in reply packet "c" is (#2, #3), the topology searching section 12 can conduct that identification from a known interconnection relationship. The topology searching section 12 further determines reply packet "c" to have been transmitted from port #2 of switch C (step S13). The topology searching section 12 next determines that port #3 of switch B and port #2 of switch C are interconnected.

Similarly, the topology searching section 12 uses reply packet "d" to determine that port #2 of switch D and port #1 of switch C are interconnected. The topology searching section 12 likewise uses reply packet "e" to determine that port #1 of switch B and port #2 of switch E are interconnected. The topology searching section 12 likewise uses reply packet "f" to determine that port #3 of switch D and port #1 of switch E are interconnected.

Next, the topology searching section 12 sets "i=3" (see step S16) and conducts the process of steps S12 to S14 for reply packets "g", "h".

The topology searching section 12 identifies that the last port identification number "1" in the output port list of reply packet "g" is port #1 of switch C (step S12). Since the output port list in reply packet "g" is (#2, #3, #1), the topology searching section 12 can conduct that identification from a known interconnection relationship. The topology searching section 12 further determines reply packet "g" to have been transmitted from port #2 of switch D. The topology searching section 12 next determines that port #1 of switch C and port #2 of switch D are interconnected (step S14).

The topology searching section 12 likewise uses reply packet "h" to determine that port #2 of switch E and port #1 of switch B are interconnected.

In the present example, although the process of steps S12 to S14 has been conducted for reply packets "g", "h" as well, the topology searching section 12 can complete topology information using only reply packets "a" to "f".

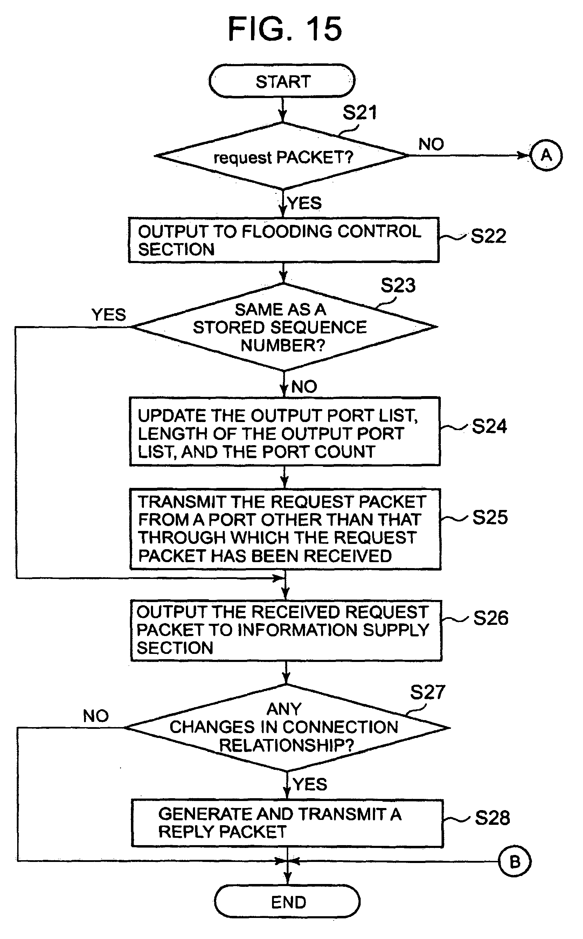

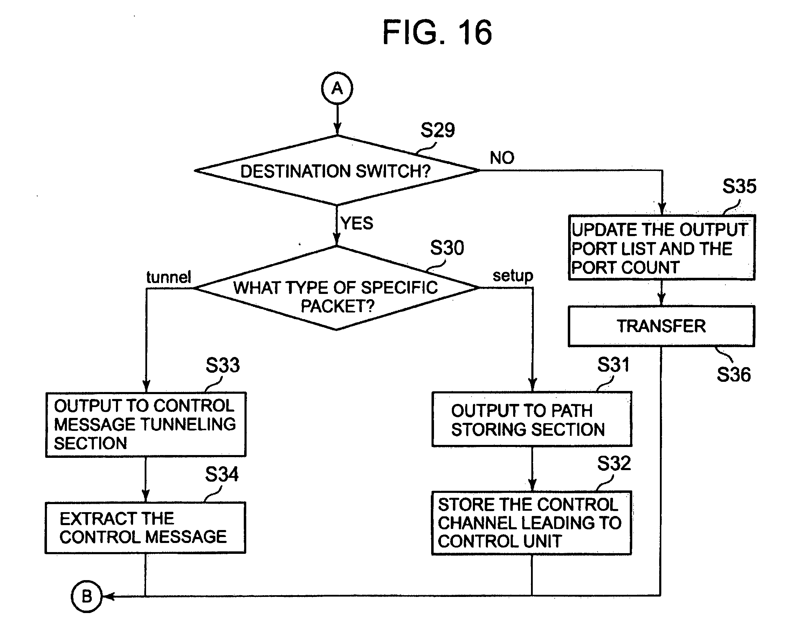

FIGS. 15 and 16 are flowcharts that show examples of a process flow in one switch. Upon the switch receiving a specific packet, the specific packet transmitting/receiving section 21 determines whether the specific packet is a request packet (step S21). If the received specific packet is a request packet ("Yes" in step S21), the specific packet transmitting/receiving section 21 outputs the request packet to the flooding control section 22.

The flooding control section 22 determines whether the sequence number in the request packet that has been input from the specific packet transmitting/receiving section 21 agrees with any of stored sequence numbers (step S23). If the sequence number does not agree with any stored ones ("No" in step S23), the flooding control section 22 conducts flooding with the request packet by executing process steps S24 and S25 that follow. More specifically, the flooding control section 22 creates a copy of the request packet for each port other than that through which the request packet has been received, and updates the output port lists, lengths thereof, and port counts in each request packet (step S24). The flooding control section 22 adds to an end of the output port list the identification number of an output port from which the request packet copied in step S24 is to be transmitted. The flooding control section 22 also replaces, of all port identification numbers in the output port list, only the port identification number corresponding to a position dictated from the port count, with the identification number of the port through which the request packet has been received. If the initial value of the port count is 0 and a current value of the port count is "k", the flood section 22 updates the (k+1)th port identification number. Additionally, the flooding control section 22 adds 1 to the length value of the output port list and the value of the port count. The flooding control section 22 next makes the specific packet transmitting/receiving section 21 transmit the request packet (step S25). The specific packet transmitting/receiving section 21 transmits the request packet from the port corresponding to the port identification number which has been added to the end of the output port list. The process next moves to step S26.

If the sequence number in the request packet agrees with any one of the stored sequence numbers ("Yes" in step S23), the flooding control section 22 does not execute process steps S24, S25 and the process then moves to step S26.

In step S26, the flooding control section 22 outputs the switch-received request packet intact to the information supply section 23.

The information supply section 23 determines whether the switch itself has changed in connection relationship from a time when reply packets were transmitted in reply to the request packets transmitted from the control unit 10 in the past (step S27). That is, the information supply section 23 determines whether the switch currently connected to the switch of the information supply section 23 is replaced by any other switch or disconnected. If there is no change in connection relationship ("No" in step S27), the request packet receive process is completed.

If there are changes in connection relationship ("Yes" in step S27), the information supply section 23 generates a reply packet and makes the specific packet transmitting/receiving section 21 transmit the reply packet (step S28). The information supply section 23 generates the reply packet that includes the information indicating a linked-up port of the switch itself, the information identifying the switch, and the identification number of the port which the switch has used to receive the request packet. The information supply section 23 also updates the last port identification number in the output port list defined in the request packet which has been input, into the identification number of the request packet receiving port, and further reverses the order of arrangement of the port identification numbers in the output port list. After this rearrangement, the information supply section 23 defines the output port list in the reply packet. The information supply section 23 also defines length of the output port list and an initial value of the port count, in the reply packet, and then makes the specific packet transmitting/receiving section 21 transmit the reply packet. The specific packet transmitting/receiving section 21 transmits the reply packet from the port indicated by the first port identification number in the output port list. The request packet receive process comes to an end upon completion of step S28.

In this way, subject to the switch being changed in connection relationship, a reply packet is generated and transmitted, whereby an increase in traffic associated with the transmission and reception of reply packets not affecting the topology information is suppressed.

If the received specific packet is not a request packet ("No" in step S21), the specific packet transmitting/receiving section 21 determines whether the switch itself that received the specific packet is the destination of the specific packet (step S29). If the switch itself is the destination ("Yes" in step S29), the specific packet transmitting/receiving section 21 discriminates the type of this specific packet (step S30).

If the specific packet is a setup packet, the specific packet transmitting/receiving section 21 outputs the setup packet to the path storing section 24 (step S31). The path storing section 24 updates the last port identification number within the output port list defined in the setup packet, into the identification number of the port through which the setup packet has been received. After this, the path storing section 24 rearranges the port identification numbers within the output port list, in reverse order, and stores the edited output port list as the information indicating the path which becomes a control channel (step S32).

If the specific packet is a tunnel packet, the specific packet transmitting/receiving section 21 outputs the tunnel packet to the control message tunneling section 25 (step S33). The control message tunneling section 25 decapsulates the control message from the tunnel packet and decodes the decapsulated control message (step S34). The switch conducts a process appropriate for the control message.

If the switch itself that received the specific packet is not the destination of this packet ("No" in step S29), the specific packet transmitting/receiving section 21 updates, of all port identification numbers in the output port list, only the port identification number corresponding to the position dictated from the port count, into the identification number of the port through which the specific packet has been received. The specific packet transmitting/receiving section 21 also adds 1 to the port count in the specific packet (step S35). After this, the specific packet transmitting/receiving section 21 transmits the specific packet (step S36).

The specific packet receive process is completed upon either step S32, S34, or S36 being finished.

According to the present invention, the control channels between the control unit and each switch are established via the communications network that the switches use to transfer data packets. In other words, the communications network that the switches use to transfer data packets, and the control channels are realized with one kind of communications network. This, in turn, yields the following advantageous effects.

First, redundancy and fault-tolerance improve. This is because, even in the case of a failure occurring in part of the communications network over which the switches transfer data packets, the control channels can be set if the paths from the control unit 10 to the switches are ensured. For example, in the topology shown in FIG. 2, even if a link fault occurs between the control unit 10 and the switch 20b, a request packet that the control unit 10 has transmitted to the switch 20a can reach each switch. This, in turn, enables the establishment of the control channels between the control unit 10 and each switch.

Comparisons against the general communication system shown by way of example in FIG. 20 are discussed below. As shown in FIG. 20, in a configuration with a control communications network 93 provided independently of a packet transfer communications network 94, even if paths exist that enable a packet to reach switches 92 from a control unit 91 physically, these paths are not used for control. Accordingly, a failure in the control communications network 93 has caused a control failure in the control unit 91, thus reducing fault-tolerance. The present invention, in contrast, improves redundancy and fault-tolerance for the foregoing reasons.

Secondly, because of there being no need to provide a special communications network for the control channels, there is no need to manage such a special communications network, and thus the communication system can be reduced in management costs. If the number of switches is increased or reduced, request packet transmission by the control unit 10 also enables the creation of the latest topology information, and hence the establishment of the control channels leading to each switch.

Comparisons against the general communication system shown by way of example in FIG. 20 are discussed below. In the communication system shown by way of example in FIG. 20, management costs increase since the control communications network 93 and the packet transfer communications network 94 both need managing. For example, if the topology of the switch group is changed by adding switches, necessity arises to add a link to both of the control communications network 93 and the packet transfer communications network 94, in order to suit/accommodate the change. In the present invention, however, the use of the foregoing sequence reduces the costs required for the management of the communication system.

Thirdly, even after the number of switches has been increased, the control unit 10 can create the latest topology information by transmitting a request packet, as described above. At this time, since only the control unit 10 is the transmission source of the request packet, traffic associated with specific-packet exchanges under the increase in the number of switches can be suppressed to a lower level than in cases such as adopting BPDU in STP. This advantage, in turn, makes it possible to prevent the communication system from spending too much time before starting the creation of topology information, and from heavily loading the communications line.

Comparisons against the general communication system shown by way of example in FIG. 20 are discussed below. In the communication system shown by way of example in FIG. 20, if the topology of switches is changed, since a control frame (e.g., BPDU in STP) that the communication system is to use to recognize the new topology is exchanged among the switches, using too many switches will lead to frequent generation of such a control frame and result in a great deal of time being required for improvement of this state, or in the communications line being heavily loaded. In the present invention, however, since the traffic associated with the specific-packet exchanges under the increase in the number of switches can, as described above, be suppressed to a lower level than in cases such as adopting BPDU in STP, scalability can be achieved with regard to a scale of the communication system.

Furthermore, each switch executes request packet flooding, so that the control unit 10, by transmitting one request packet from one port, can collect a reply packet used to identify a topology of a chain of switches connected to that port. The control unit 10, therefore, needs only to transmit one request packet from one port during one session of periodical topology searching. This minimizes a reply packet collection time.

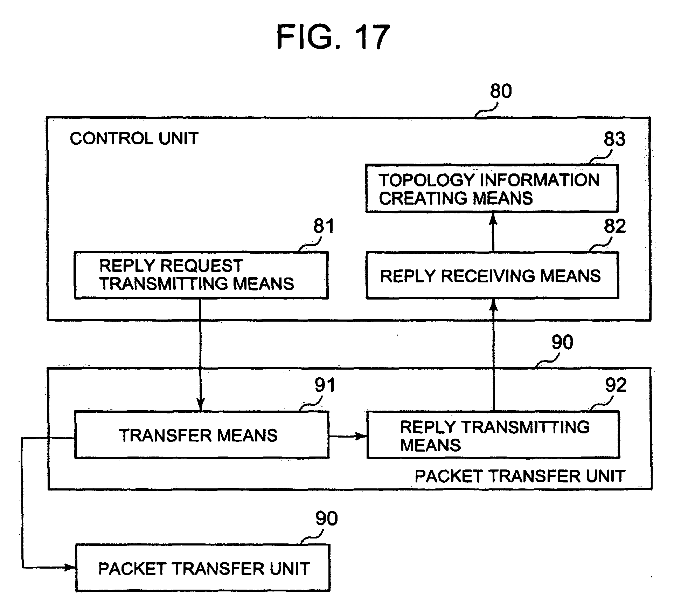

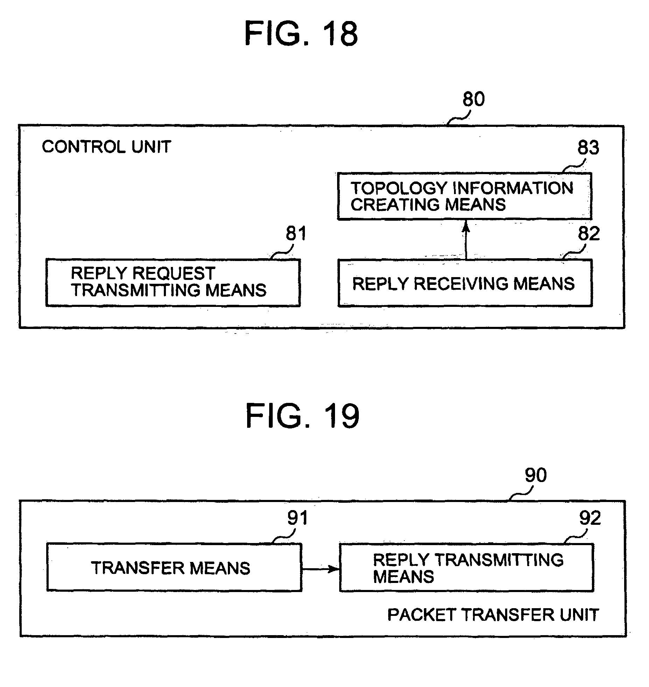

Next, examples of minimum configurations of the present invention are described below. FIG. 17 is a block diagram showing an example of a minimum configuration of the communication system according to the present invention. FIG. 18 is a block diagram showing an example of a minimum control unit configuration in the present invention. FIG. 19 is a block diagram showing an example of a minimum packet transfer unit configuration in the present invention.

The communication system according to the present invention includes a plurality of packet transfer units 90 (e.g., the switches 20a to 20d) and a control unit 80 (e.g., the control unit 10) that controls each packet transfer unit 90.

The control unit 80 includes reply request transmitting means 81, reply receiving means 82, and topology information creating means 83 (see FIGS. 17, 18).

The reply request transmitting means 81 (e.g., a part that includes the topology searching section 12 and the control unit-side specific packet transmitting/receiving section 11) transmits a reply request (e.g., a request packet) to the packet transfer unit.

The reply receiving means 82 (e.g., the control unit-side specific packet transmitting/receiving section 11) receives a reply (e.g., a reply packet) that includes information on ports provided at the packet transfer unit, from the packet transfer unit.

The topology information creating means 83 (e.g., the topology searching section 12) uses the replies transmitted from each packet transfer unit, to create topology information that includes information on interconnection between a port provided at the control unit and each port of the packet transfer units.

The packet transfer unit 90 includes transfer means 91 and reply transmitting means 92 (see FIGS. 17, 19).

The transfer means 91 (e.g., a part that includes the flooding control section 22 and the specific packet transmitting/receiving section 21), upon receiving a reply request, transfers the reply request from a port other than that through which the reply request has been received.

The reply transmitting means 92 (e.g., a part that includes the information supply section 23 and the switch-side specific packet transmitting/receiving section 21), upon receiving a reply request, returns a reply that includes information on ports of the local packet transfer unit, the reply being transmitted through a path for the control unit.

This application claims priority based on Japanese Patent Application No. 2009-298853, filed on December 28, 2009.

### Industrial Applicability

The present invention is suitably applied to a communication system that includes a plurality of packet transfer units and a control unit that controls each packet transfer unit.

### Reference Signs List

10 Control unit
11 Control unit-side specific packet transmitting/receiving section
12 Topology searching section
13 Topology storing section
14 Control channel path determining section
15 Control unit-side control message tunneling section
20, 20a to 20d, 20A to 20D Switches (Packet transfer units)
21 Switch-side specific packet transmitting/receiving section
22 Flooding control section
23 Information supply section
24 Path storing section
25 Switch-side control message tunneling section

## Claims

1. A communication system comprising:
a plurality of switches (20a, 20b, 20c, 20d); and
a control unit (10) that controls each of the switches, said communications system being **characterized in that** the control unit includes
a reply request transmitting means (11) that transmits a reply request to the switch,
a reply receiving means (11) that receives a reply including information on ports provided at the switch, from the switch,
a topology information creating means (12) that creates topology information, based on the reply transmitted from each switch, the topology information including port interconnection information relative to ports provided at the control unit and each port of the switches, and
a control channel determining means (14) that determines a control channel for control messages, using a communication network that the switches use to transfer packets, based on the topology information; and
the switch includes
a transfer means (21) that transfers the reply request from a port other than that through which the reply request has been received, when the reply request is received, and
a reply transmitting means (21) that returns the reply including information on the ports of the switch, the reply being transmitted through a path for the control unit, when the reply request is received; and
the control unit transmits control messages to each switch and receives control messages from each switch, via the control channel that is determined using the communication network.

2. The communication system according to claim 1,
wherein: the reply request transmitting means transmits a reply request to the switch periodically, the reply request including transmission count identification information which indicates reply request transmission number of times; and
the transfer means a reply request from a port other than that through which the transfer means has received the reply request, when the number included in the transmission count identification information in the received reply request is the number which has not received yet.

3. The communication system according to claim 2,
wherein: the reply transmitting means returns a reply responsive to the received reply request, if a connection relationship of the switch itself that has received the reply request, with respect to any other switch, is changed from a time when the reply is transmitted in response to a reply request transmitted from the control unit in the past.

4. The communication system according to claim 2 or 3,
wherein: the topology information creating means updates the topology information based on the reply, when the topology information creating means received a reply responsive to the reply request transmitted after the creation of topology information.

5. The communication system according to any one of claims 1 to 4,
wherein:
the control channel determining means determines the control channel which is the path between the control unit and each switch based on topology information, and
the control unit includes
a control channel notice transmitting means (11) that transmits a control channel notice to notify the switch of the control channel; and
the switch includes
a control channel storing means (24) that stores the control channel formed between the control unit and the switch, based on the control channel notice, when the control channel notice is received.

6. A control unit (10) that controls a plurality of switches (20a, 20b, 20c, 20d),
said control unit being **characterized in that** comprises:
a reply request transmitting means (11) that transmits a reply request to the switch,
a reply receiving means (11) that receives a reply including information on ports provided at the switch, from the switch,
a topology information creating means (12) that creates topology information, based on the reply transmitted from each switch, the topology information including port interconnection information relative to ports provided at the control unit and each port of the switches,
a control channel determining means (14) that determines a control channel for control messages, using a communication network that the switches use to transfer packets, based on the topology information, and
a means (15) that transmits control messages to each switch and receives control messages from each switch, via the control channel that is determined using the communication network.

7. The control unit according to claim 6,
wherein: the reply request transmitting means transmits a reply request to the switch periodically, the reply request including transmission count identification information which indicates reply request transmission number of times.

8. A switch (20a, 20b, 20c, 20d) controlled by a control unit (10) using openflow protocol, in a communications system according to claim 1, said switch being
**characterized in that**
comprises:
a transfer means (21) that transfers the reply request from a port other than that through which the reply request has been received, when the reply request from the control unit is received,
a reply transmitting means (21) that returns the reply including information on the ports of the switch, the reply being transmitted through a path for the control unit, when the reply request from the control unit is received, and
a means (25) that transmits and receives control messages via a control channel that is determined by the control unit using a communication network that the switch uses to transfer packets, based on topology information.

9. A control method implemented by a control unit (10) that controls a plurality of switches (20a, 20b, 20c, 20d), in a communications system according to claim 1,
said method being **characterized in that**
the control unit executes the steps of:
transmitting a reply request to each switch;
receiving, from the switch, a reply that includes information on ports provided at the switch;
creating topology information, based on the reply transmitted from each switch, the topology information including port interconnection information relative to ports provided at the control unit and each port of the switches; and
determining a control channel for control messages, using a communication network that the switches use to transfer packets, based on the topology information.

10. A control unit-use program installed on a computer which is a control unit (10) that controls a plurality of switches (20a, 20b, 20c, 20d), said control unit-use program being **characterized in that**, when executed by a computer
causes said computer to execute the steps of:
transmitting a reply request to each switch;
receiving, from the switch, a reply that includes information on ports provided at the switch;
creating topology information, based on the reply transmitted from each switch, the topology information including port interconnection information relative to ports provided at the control unit and each port of the switches;
determining a control channel for control messages, using a communication network that the switches use to transfer packets, based on the topology information;
and
transmitting control messages to each switch and receiving control messages from each switch, via the control channel that is determined using the communication network.

## Patentansprüche

1. Kommunikationssystem, das Folgendes umfasst:
mehrere Switches (20a, 20b, 20c, 20d);
eine Steuereinheit (10), die jeden der Switches steuert, wobei das Kommunikationssystem **dadurch gekennzeichnet ist, dass** die Steuereinheit Folgendes umfasst:
ein Antwortanforderungssendemittel (11), das eine Antwortanforderung zum Switch sendet,
ein Antwortempfangsmittel (11), das eine Antwort einschließlich Informationen über an dem Switch vorgesehene Ports von dem Switch empfängt,
ein Topologieinformationen-Erzeugungsmittel (12), das Topologieinformationen auf der Basis der von jedem Switch gesendeten Antwort erzeugt, wobei die Topologieinformationen Portverbindungsinformationen in Bezug auf an der Steuereinheit vorgesehene Ports und jeden Port der Switches beinhalten, und
ein Steuerkanalermittlungsmittel (14), das auf der Basis der Topologieinformationen einen Steuerkanal für Steuernachrichten mittels eines Kommunikationsnetzes ermittelt, das die Switches zum Übertragen von Paketen benutzt; und
der Switch Folgendes umfasst:
ein Übertragungsmittel (21), das die Antwortanforderung von einem anderen Port als dem überträgt, durch den die Antwortanforderung empfangen wurde, wenn die Antwortanforderung empfangen wird, und
ein Antwortsendemittel (21), das die Antwort einschließlich Informationen über die Ports des Switch zurücksendet, wobei die Antwort durch einen Pfad für die Steuereinheit gesendet wird, wenn die Antwortanforderung empfangen wird; und
die Steuereinheit sendet Steuernachrichten zu jedem Switch und empfängt Steuernachrichten von jedem Switch, über den Steuerkanal, der mittels des Kommunikationsnetzes ermittelt wird.

2. Kommunikationssystem nach Anspruch 1,
wobei: das Antwortanforderungssendemittel eine Antwortanforderung periodisch zum Switch sendet, wobei die Antwortanforderung Sendezahl-Identifikationsinformationen beinhaltet, die die Häufigkeit des Sendens einer Antwortanforderung anzeigen; und
das Übertragungsmittel eine Antwortanforderung von einem anderen Port als dem überträgt, durch den das Übertragungsmittel die Antwortanforderung empfangen hat, wenn die in der Sendezahl-Identifikationsinformation in der empfangenen Antwortanforderung enthaltene Zahl die Zahl ist, die noch nicht empfangen wurde.

3. Kommunikationssystem nach Anspruch 2,
wobei: das Antwortsendemittel eine Antwort als Reaktion auf die empfangene Antwortanforderung zurückgibt, wenn sich eine Verbindungsbeziehung des Switch selbst, der die Antwortanforderung empfangen hat, mit Bezug auf einen anderen Switch, von einem Zeitpunkt, an dem die Antwort als Reaktion auf eine von der Steuereinheit in der Vergangenheit gesendete Antwortanforderung gesendet wurde, geändert hat.

4. Kommunikationssystem nach Anspruch 2 oder 3,
wobei: das Topologieinformationen-Erzeugungsmittel die Topologieinformationen auf der Basis der Antwort aktualisiert, wenn das Topologieinformationen-Erzeugungsmittel eine Antwort als Reaktion auf die nach dem Erzeugen von Topologieinformationen gesendete Antwortanforderung empfangen hat.

5. Kommunikationssystem nach einem der Ansprüche 1 bis 4, wobei:
das Steuerkanalermittlungsmittel auf der Basis von Topologieinformationen den Steuerkanal ermittelt, der der Pfad zwischen der Steuereinheit und jedem Switch ist, und
die Steuereinheit Folgendes umfasst:
ein Steuerkanalhinweis-Sendemittel (11), das einen Steuerkanalhinweis sendet, um den Switch über den Steuerkanal zu informieren; und
der Switch Folgendes umfasst:
ein Steuerkanalspeichermittel (24), das auf der Basis des Steuerkanalhinweises den zwischen der Steuereinheit und dem Speicher gebildeten Steuerkanal speichert, wenn der Steuerkanalhinweis empfangen wird.

6. Steuereinheit (10), die mehrere Switches (20a, 20b, 20c, 20d) steuert, wobei die Steuereinheit **dadurch gekennzeichnet ist, dass** sie Folgendes umfasst:
ein Antwortanforderungssendemittel (11), das eine Antwortanforderung zum Switch sendet,
ein Antwortempfangsmittel (11), das eine Antwort mit Informationen über an dem Switch vorgesehene Ports von dem Switch empfängt,
ein Topologieinformationen-Erzeugungsmittel (12), das, auf der Basis der von jedem Switch gesendeten Antwort Topologieinformationen erzeugt, wobei die Topologieinformationen Portverbindungsinformationen in Bezug auf die an der Steuereinheit vorgesehenen Ports und auf jeden Port der Switches beinhalten,
ein Steuerkanalermittlungsmittel (14), das auf der Basis der Topologieinformationen einen Steuerkanal für Steuernachrichten mittels eines Kommunikationsnetzes ermittelt, das die Switches zum Übertragen von Paketen benutzt, und
ein Mittel (15), das über den mit dem Kommunikationsnetz ermittelten Steuerkanal Steuernachrichten zu jedem Switch sendet und Steuernachrichten von jedem Switch empfängt.

7. Steuereinheit nach Anspruch 6,
wobei: das Antwortanforderungssendemittel eine Antwortanforderung periodisch zum Switch sendet, wobei die Antwortanforderung Sendezahl-Identifikationsinformationen enthält, die die Häufigkeit des Sendens einer Antwortanforderung anzeigen.

8. Switch (20a, 20b, 20c, 20c), gesteuert durch eine Steuereinheit (10) mittels des OpenFlow-Protokolls in einem Kommunikationssystem nach Anspruch 1, wobei der genannte Switch **dadurch gekennzeichnet ist, dass** er Folgendes umfasst:
ein Übertragungsmittel (21), das die Antwortanforderung von einem anderen Port als dem überträgt, durch den die Antwortanforderung empfangen wurde, wenn die Antwortanforderung von der Steuereinheit empfangen wird,
ein Antwortsendemittel (21), das die Antwort mit Informationen über die Ports des Switch zurücksendet, wobei die Antwort durch einen Pfad für die Steuereinheit gesendet wird, wenn die Antwortanforderung von der Steuereinheit empfangen wird, und
ein Mittel (25), das auf der Basis von Topologieinformationen Steuernachrichten über einen Steuerkanal sendet und empfängt, der von der Steuereinheit mittels eines Kommunikationsnetzes ermittelt wird, das der Switch zum Übertragen von Paketen benutzt.

9. Steuerverfahren, implementiert durch eine Steuereinheit (10), die mehrere Switches (20a, 20b, 20c, 20d) steuert, in einem Kommunikationssystem nach Anspruch 1, wobei das genannte Verfahren **dadurch gekennzeichnet ist, dass** die Steuereinheit die folgenden Schritte ausführt:
Senden einer Antwortanforderung zu jedem Switch;
Empfangen, von dem Switch, einer Antwort, die Informationen über an dem Switch vorgesehene Ports beinhaltet;
Erzeugen von Topologieinformationen auf der Basis der von jedem Switch gesendeten Antwort, wobei die Topologieinformationen Portverbindungsinformationen in Bezug auf die an der Steuereinheit vorgesehenen Ports und jeden Port der Switches beinhalten; und
Ermitteln eines Steuerkanals für Steuernachrichten mittels eines Kommunikationspakets, das die Switches zum Übertragen von Paketen benutzen, auf der Basis der Topologieinformationen.

10. Programm zur Benutzung einer Steuereinheit, das auf einem Computer installiert ist, der eine Steuereinheit (10) ist, die mehrere Switches (20a, 20b, 20c, 20d) steuert, wobei das genannte Steuereinheitsbenutzungsprogramm **dadurch gekennzeichnet ist, dass** es bei Abarbeitung durch einen Computer bewirkt, dass der genannte Computer die folgenden Schritte ausführt:
Senden einer Antwortanforderung zu jedem Switch;
Empfangen einer Antwort von dem Switch, die Informationen über am Switch vorgesehene Ports beinhaltet;
Erzeugen von Topologieinformationen auf der Basis der von jedem Switch gesendeten Antwort, wobei die Topologieinformationen Portverbindungsinformationen über auf an der Steuereinheit vorgesehene Ports und jeden Port der Switches beinhalten;
Ermitteln, auf der Basis der Topologieinformationen, eines Steuerkanals für Steuernachrichten mittels eines Kommunikationsnetzes, das die Switches zum Übertragen von Paketen benutzt; und
Senden von Steuernachrichten zu jedem Switches und Empfangen von Steuernachrichten von jedem Switch, über den Steuerkanal, der mittels des Kommunikationsnetzes ermittelt wird.

## Revendications

1. Système de communication, comprenant :
une pluralité de commutateurs (20a, 20b, 20c, 20d) ; et
une unité de commande (10) qui commande chacun des commutateurs, ledit système de communication étant **caractérisé en ce que** l'unité de commande comprend :
un moyen de transmission de requête de réponse (11) qui transmet une requête de réponse au commutateur,
un moyen de réception de réponse (11) qui reçoit une réponse comprenant des informations sur des ports fournis au commutateur, du commutateur,
un moyen de création d'informations de topologie (12) qui crée des informations de topologie, sur la base de la réponse transmise de chaque commutateur, les informations de topologie comprenant des informations d'interconnexion de ports se rapportant aux ports fournis à l'unité de commande et à chaque port des commutateurs, et
un moyen de détermination de canal de commande (14) qui détermine un canal de commande pour des messages de commande, en utilisant un réseau de communication que les commutateurs utilisent pour transférer des paquets, sur la base des informations de topologie ; et
le commutateur comprend :
un moyen de transfert (21) qui transfère la requête de réponse d'un port autre que celui par lequel la requête de réponse a été reçue, lorsque la requête de réponse est reçue, et
un moyen de transmission de réponse (21) qui renvoie la réponse comprenant des informations sur les ports du commutateur, la réponse étant transmise par un chemin pour l'unité de commande, lorsque la requête de réponse est reçue ; et
l'unité de commande transmet des messages de commande à chaque commutateur et reçoit des messages de commande de chaque commutateur, via le canal de commande qui est déterminé en utilisant le réseau de communication.

2. Système de communication selon la revendication 1, dans lequel :
le moyen de transmission de requête de réponse transmet une requête de réponse périodiquement au commutateur, la requête de réponse comprenant des informations d'identification de compte de transmission qui indiquent le nombre de fois de transmission de requête de réponse ; et
le transfert signifie une requête de réponse d'un port autre que celui par lequel le moyen de transfert a reçu la requête de réponse, lorsque le nombre inclus dans les informations d'identification de compte de transmission dans la requête de réponse reçue est le nombre qui n'a pas encore été reçu.

3. Système de communication selon la revendication 2, dans lequel :
le moyen de transmission de réponse renvoie une réponse en réponse à la requête de réponse reçue, si une relation de connexion du commutateur même qui a reçu la requête de réponse, par rapport à un autre commutateur quelconque, est modifiée depuis un temps lorsque la réponse est transmise en réponse à une requête de réponse transmise de l'unité de commande dans le passé.

4. Système de communication selon la revendication 2 ou 3, dans lequel :
le moyen de création d'informations de topologie actualise les informations de topologie sur la base de la réponse, lorsque le moyen de création d'informations de topologie a reçu une réponse en réponse à la requête de réponse transmise après la création d'informations de topologie.

5. Système de communication selon l'une quelconque des revendications 1 à 4, dans lequel :
le moyen de détermination de canal de commande détermine le canal de commande qui est le chemin entre l'unité de commande et chaque commutateur sur la base des informations de topologie, et
l'unité de commande comprend :
un moyen de transmission de notification de canal de commande (11) qui transmet une notification de canal de commande pour notifier le commutateur du canal de commande ; et
le commutateur comprend :
un moyen de stockage de canal de commande (24) qui stocke le canal de commande formé entre l'unité de commande et le commutateur, sur la base de la notification de canal de commande, lorsque la notification de canal de commande est reçue.

6. Unité de commande (10) qui commande une pluralité de commutateurs (20a, 20b, 20c, 20d), ladite unité de commande étant **caractérisée en ce qu'**elle comprend :
un moyen de transmission de requête de réponse (11) qui transmet une requête de réponse au commutateur,
un moyen de réception de réponse (11) qui reçoit une réponse comprenant des informations sur des ports fournis au commutateur, du commutateur,
un moyen de création d'informations de topologie (12) qui crée des informations de topologie, sur la base de la réponse transmise de chaque commutateur, les informations de topologie comprenant des informations d'interconnexion de ports se rapportant aux ports fournis à l'unité de commande et à chaque port des commutateurs, et
un moyen de détermination de canal de commande (14) qui détermine un canal de commande pour des messages de commande, en utilisant un réseau de communication que les commutateurs utilisent pour transférer des paquets, sur la base des informations de topologie, et
un moyen (15) qui transmet des messages de commande à chaque commutateur et reçoit des messages de commande pour chaque commutateur, via le canal de commande qui est déterminé en utilisant le réseau de communication.

7. Unité de commande selon la revendication 6, dans laquelle :
le moyen de transmission de requête de réponse transmet une requête de réponse périodiquement au commutateur, la requête de réponse comprenant des informations d'identification de compte de transmission qui indiquent le nombre de fois de transmission de requête de réponse.

8. Commutateur (20a, 20b, 20c, 20d) contrôlé par une unité de commande (10) en utilisant le protocole OpenFlow, dans un système de communication selon la revendication 1, ledit commutateur étant **caractérisé en ce qu'**il comprend :
un moyen de transfert (21) qui transfère la requête de réponse d'un port autre que celui à travers lequel la requête de réponse a été reçue, lorsque la requête de réponse de l'unité de commande est reçue,
un moyen de transmission de réponse (21) qui renvoie la réponse comprenant des informations sur les ports du commutateur, la réponse étant transmise par un chemin pour l'unité de commande, lorsque la requête de réponse de l'unité de commande est reçue, et
un moyen (25) qui transmet et reçoit des messages de commande via un canal de commande qui est déterminé par l'unité de commande en utilisant un réseau de communication que le commutateur utilise pour transférer des paquets, sur la base des informations de topologie.

9. Procédé de commande mise en oeuvre par une unité de commande (10) qui commande une pluralité de commutateurs (20a, 20b, 20c, 20d) dans un système de communication selon la revendication 1, ledit procédé étant **caractérisé en ce que** :
l'unité de commande exécute les étapes consistant à :
transmettre une requête de réponse à chaque commutateur ;
recevoir, du commutateur, une réponse qui comprend des informations sur des ports fournis au commutateur ;
créer des informations de topologie, sur la base de la réponse transmise de chaque commutateur, les informations de topologie comprenant des informations d'interconnexion de ports se rapportant aux ports fournis à l'unité de commande et à chaque port des commutateurs ; et
déterminer un canal de commande pour des messages de commande, en utilisant un réseau de communication que les commutateurs utilisent pour transférer des paquets, sur la base des informations de topologie.

10. Programme d'utilisation d'unité de commande installé sur un ordinateur qui est une unité de commande (10) qui commande une pluralité de commutateurs (20a, 20b, 20c, 20d), ledit programme d'utilisation d'unité de commande étant **caractérisé en ce que**, lorsque exécuté par un ordinateur, il fait que ledit ordinateur exécute les étapes consistant à :
transmettre une requête de réponse à chaque commutateur ;
recevoir, du commutateur, une réponse qui comprend des informations sur des ports fournis au commutateur ;
créer des informations de topologie, sur la base de la réponse transmise de chaque commutateur, les informations de topologie comprenant des informations d'interconnexion de ports se rapportant aux ports fournis à l'unité de commande et à chaque port des commutateurs ; et
déterminer un canal de commande pour des messages de commande, en utilisant un réseau de communication que les commutateurs utilisent pour transférer des paquets, sur la base des informations de topologie ; et
transmettre des messages de commande à chaque commutateur et recevoir des messages de commande de chaque commutateur, via le canal de commande qui est déterminé en utilisant le réseau de communication.
